# FASCICULE DE BREVET EUROPEEN

(11) **EP 2 819 052 B1**
(45) Date de publication et mention de la délivrance du brevet: **01.08.2018**
(21) Numéro de dépôt: 14173765.0
(22) Date de dépôt: 24.06.2014
(51) Int. Cl.: G06F 21/44, G06F 21/60, G06F 21/62, G06F 21/34, H04L 29/06, H04L 9/32

(54) **Procédé et serveur de traitement d'une requête d'accès d'un terminal à une ressource informatique**
Verfahren und Server zur Bearbeitung einer Zugriffsanfrage von einem Endgerät auf eine IT-Ressource
Method and server for processing a request for a terminal to access a computer resource

(30) Priorité: 25.06.2013 FR 1356099
(43) Date de publication de la demande: 31.12.2014
(73) Titulaire: Orange, 75015 Paris (FR)
(72) Inventeur: He, Ruan, 92130 Issy les Moulinaux (FR); Qian, Xiangjun, 92794 Issy les Moulineaux Cedex 9 (FR)
(74) Mandataire: Fontenelle, Sandrine

(56) Documents cités:
- US-B1- 6 192 405
- Web Services Amazon: "AWS Security Token Service Using Temporary Security Credentials", , 15 juin 2011 (2011-06-15), XP055098228, Extrait de l'Internet: URL:http://awsdocs.s3.amazonaws.com/STS/la test/sts-ug.pdf [extrait le 2014-01-23]
- SOMCHART FUGKEAW: "Achieving privacy and security in multi-owner data outsourcing", DIGITAL INFORMATION MANAGEMENT (ICDIM), 2012 SEVENTH INTERNATIONAL CONFERENCE ON, IEEE, 22 août 2012 (2012-08-22), pages 239-244, XP032271877, DOI: 10.1109/ICDIM.2012.6360134 ISBN: 978-1-4673-2428-1
- Mary E Thompson ET AL: Proceedings of the 8 th USENIX Security Symposium Washington, 26 août 1999 (1999-08-26), XP055097711, Extrait de l'Internet: URL:http://static.usenix.org/publications/ library/proceedings/sec99/full_papers/thom pson/thompson.pdf [extrait le 2014-01-22]
- Inc. Amazon: "AWS Identity and Access Management", Amazon Web Services, 8 mai 2010 (2010-05-08), XP055097543, Extrait de l'Internet: URL:http://awsdocs.s3.amazonaws.com/IAM/la test/iam-ug.pdf [extrait le 2014-01-21]
- SANDHU R S: "ROLE-BASED ACCESS CONTROL MODELS", COMPUTER, IEEE, US, vol. 29, no. 2, 1 février 1996 (1996-02-01), pages 38-47, XP000556012, ISSN: 0018-9162, DOI: 10.1109/2.485845
- A. Abou El Kalam ET AL: "Organization based access control", POLICY '03 Proceedings of the 4th IEEE International Workshop on Policies for Distributed Systems and Networks, 6 juin 2003 (2003-06-06), pages 1-12, XP055065287, Extrait de l'Internet: URL:http://ieeexplore.ieee.org/ielx5/8577/ 27164/01206966.pdf?tp=&arnumber=1206966&is number=27164 [extrait le 2013-06-04]
- Anonymous: "Using Temporary Security Credentials - AWS STS", , 20 June 2013 (2013-06-20), XP055353228, Retrieved from the Internet: URL:http://web.archive.org/web/20130620075 538/http://awsdocs.s3.amazonaws.com/STS/la test/sts-ug.pdf [retrieved on 2017-03-09]
- Anonymous: "AWS Identity and Access Management - Using IAM", , 20 June 2013 (2013-06-20), XP055353248, Retrieved from the Internet: URL:http://web.archive.org/web/20130620090 425/http://awsdocs.s3.amazonaws.com/IAM/la test/iam-ug.pdf [retrieved on 2017-03-09]

## Description

### Arrière-plan de l'invention

L'invention se rapporte au domaine général des télécommunications, et notamment aux systèmes informatiques dits « en nuage », connus également sous le nom de systèmes de « cloud computing ».

Elle concerne plus particulièrement l'accès par un utilisateur d'une entité telle une entreprise, à des ressources informatiques mises à la disposition de cette entité par un système de cloud computing.

Selon la définition donnée par le National Institute of Standards and Technology (NIST), l'informatique en nuage ou « cloud computing » est un modèle permettant à des utilisateurs d'accéder via un réseau, à la demande et en libre-service, à des ressources informatiques telles un espace de stockage, de la puissance de calcul, des applications, des ressources réseaux, des logiciels ou encore des services, qui sont virtualisées (i.e. rendues virtuelles) et mutualisées.

Autrement dit, les ressources informatiques ne se trouvent plus sur un serveur local d'une entité ou sur un poste d'un utilisateur, mais sont, conformément au concept de cloud computing, dématérialisées dans un nuage composé de plusieurs serveurs distants interconnectés entre eux, et accessibles par les utilisateurs via par exemple une application réseau. Les utilisateurs peuvent ainsi accéder de manière évolutive à ces ressources, sans avoir à gérer l'infrastructure sous-jacente de gestion de ces ressources qui est souvent complexe.

Le concept de « cloud computing » est décrit plus en détail dans le document édité par l'ITU (International Télécommunication Union) intitulé « FG Cloud TR, version 1.0 - Part 1 : Introduction to the cloud ecosystem : définitions, taxonomies, use cases and high-level requirements », février 2012.

De façon connue, le « cloud computing » bénéficie de nombreux avantages :
- flexibilité et diversité des ressources qui sont mutualisées et quasiment illimitées,
- évolutivité possible des ressources, fournies à la demande,
- administration simple et automatisée des infrastructures informatiques et réseaux des entreprises, et réduction des coûts d'administration,
- etc.

Un enjeu majeur du concept de « cloud computing » est toutefois de garantir la protection et la sécurisation de l'accès aux ressources.

En effet, passer d'un environnement informatique traditionnel, sécurisé et fermé, à une infrastructure dans un nuage, ouverte et mutualisée, sur laquelle l'utilisateur ou l'entreprise n'a aucun contrôle, et qui est accessible via un réseau de télécommunications tel que le réseau public Internet, particulièrement vulnérable et sans cesse sujet aux attaques et aux piratages informatiques, n'est pas sans susciter quelques inquiétudes chez les potentiels utilisateurs en termes de sécurité.

Le contrôle d'accès apparait donc aujourd'hui pour l'ITU comme un moyen fondamental pour sécuriser l'accès à des systèmes informatiques en nuage.

Les solutions publiques actuelles de systèmes informatiques en nuage, telles que Amazon Web Services ou Windows Azure, mettent en oeuvre des mécanismes de gestion d'identités et de contrôle d'accès relativement simples s'appuyant essentiellement sur les trois processus suivants :
- gestion d'identités numériques et de données d'authentification auprès du système informatique en nuage ;
- authentification des utilisateurs ; et
- autorisation des utilisateurs à accéder aux ressources mises à disposition par le système informatique en nuage.

Le document d'Amazon Web Services, intitulé « AWS Security Token Service Using Temporary Security Credentials », 15 juin 2011, décrit un procédé et un système permettant à un utilisateur un accès limité, temporaire et sécurisé à des ressources.

Ces solutions offrent généralement la possibilité à chaque entité cliente de créer un compte client, puis sous chaque compte client, de définir des utilisateurs et d'attribuer à ces utilisateurs ou à des groupes d'utilisateurs des droits en matière d'accès à des ressources mises à disposition de l'entité par le système informatique en nuage. Chaque utilisateur bénéficie de ses propres données d'authentification auprès du système informatique en nuage (typiquement un identifiant d'utilisateur et une clé privée de chiffrement associée à une clé publique de chiffrement détenue par le système informatique en nuage) et peut utiliser ces données pour accéder aux ressources mises à disposition par le système informatique en nuage. Le contrôle de l'accès à proprement parler aux ressources s'appuie sur un modèle de contrôle d'accès prédéfini pour l'ensemble des comptes client, comme par exemple sur le modèle RBAC (Role-Based Access Control) décrit dans le document de R-S. Sandhu et al., « Role-Based Access Control Models », IEEE Computer 29(2), pages 38-47, 1996.

Un tel mécanisme de gestion d'identités et de contrôle d'accès, s'il permet de sécuriser l'accès aux ressources mises à disposition par le système informatique en nuage et de garantir une séparation des ressources destinées à des entités clientes différentes, manque toutefois de flexibilité. En effet, un seul modèle de contrôle d'accès prédéfini est adopté pour l'ensemble des comptes clients. Or ce modèle unique peut ne pas convenir à toutes les entités clientes.

### Objet et résumé de l'invention

L'invention est définie par les revendications indépendantes. L'invention permet notamment de pallier cet inconvénient en proposant un procédé de traitement d'une requête d'accès d'un terminal d'un utilisateur à une ressource informatique mise à la disposition d'une entité cliente par une plateforme d'un fournisseur de service informatique en nuage, ce procédé étant destiné à être mis en oeuvre par un module d'authentification et d'autorisation d'un serveur situé entre le terminal et la plateforme, ce module d'authentification et d'autorisation étant associé à l'entité cliente, le procédé de traitement comprenant, suite à la réception de la requête d'accès par le serveur :
- une étape d'authentification de l'utilisateur à l'aide d'au moins un premier paramètre d'authentification de l'utilisateur auprès du serveur ;
- une étape de vérification que l'utilisateur est autorisé à accéder via le terminal à la ressource informatique en appliquant à l'utilisateur et à la ressource un modèle de contrôle d'accès et une politique de contrôle d'accès correspondant au modèle obtenus par le module d'authentification et d'autorisation pour l'entité cliente ;
- si l'utilisateur est autorisé à accéder à la ressource informatique, une étape d'envoi vers la plateforme d'une requête dérivée de la requête d'accès à partir d'au moins un deuxième paramètre d'authentification de l'entité cliente auprès de la plateforme ;
- sinon une étape de rejet de la requête d'accès.

Corrélativement, l'invention vise également un serveur, situé entre un terminal d'un utilisateur et une plateforme d'un fournisseur de service informatique en nuage mettant à la disposition d'au moins une entité cliente des ressources informatiques, ce serveur comprenant au moins un module d'authentification et d'autorisation associé à une dite entité cliente et comportant :
- une unité d'authentification de l'utilisateur, activée suite à la réception d'une requête d'accès du terminal à une dite ressource informatique mise à la disposition de l'entité cliente, cette unité d'authentification étant apte à utiliser au moins un premier paramètre d'authentification de l'utilisateur auprès du serveur ;
- une unité de vérification apte à vérifier que l'utilisateur est autorisé à accéder via le terminal à la ressource informatique, en appliquant à l'utilisateur et à la ressource un modèle de contrôle d'accès et une politique de contrôle d'accès correspondant à ce modèle obtenus par l'unité de vérification pour l'entité cliente ;
- une unité d'envoi, activée si l'utilisateur est autorisé à accéder à la ressource informatique, apte à envoyer vers la plateforme une requête dérivée de la requête d'accès à partir d'au moins un deuxième paramètre d'authentification de l'entité cliente auprès de la plateforme ; et
- une unité apte à rejeter la requête d'accès si l'utilisateur n'est pas autorisé à accéder à la ressource informatique.

L'invention propose donc un mécanisme sécurisé de contrôle d'accès à des ressources informatiques mises à la disposition d'une entité cliente par un système informatique en nuage reposant sur un dispositif fonctionnel distinct de la plateforme du fournisseur de service informatique en nuage, à savoir sur un serveur placé en amont de cette plateforme. Ce serveur vise à contrôler l'accès par un utilisateur à un compte d'une entité cliente enregistré auprès d'une plateforme d'un fournisseur de service informatique en nuage et via lequel des ressources informatiques sont offertes à l'entité cliente par cette plateforme.

Plus précisément, l'utilisateur cherchant à accéder via un terminal à une ressource informatique réservée à l'entité cliente est authentifié par un module d'authentification et d'autorisation du serveur dédié à celle-ci. Cette authentification s'appuie sur l'utilisation de paramètre(s) d'authentification de l'utilisateur auprès du serveur, qui a ou ont été défini(s) préalablement entre l'utilisateur (ou plus précisément son terminal) et le serveur, et/ou le cas échéant, échangés entre eux.

Au sens de l'invention, on entend par « paramètres d'authentification » d'une entité quelconque A auprès d'une entité quelconque B des éléments qui permettent de générer et/ou de traiter (manipuler) des données d'authentification de l'entité A auprès de l'entité B, c'est-à-dire des données qui vont être utilisées par l'entité A pour prouver son identité à l'entité B et être ainsi authentifié par l'entité B. De tels paramètres d'authentification peuvent ainsi désigner une clé secrète de chiffrement partagée entre (i.e. détenue par) l'entité A et l'entité B, ou une paire de clés publique et privée détenues respectivement par l'entité B et l'entité A et qui vont permettre de générer et de traiter une donnée d'authentification telle que par exemple une signature numérique, un certificat ou un jeton ou token de sécurité permettant à l'entité B de s'assurer de l'identité de l'entité A.

Le serveur exécute également une vérification visant à s'assurer que l'utilisateur authentifié est bien autorisé à accéder à la ressource requise. A cet effet, il utilise un modèle de contrôle d'accès et une politique de contrôle d'accès associée à ce modèle obtenus par le serveur pour l'entité cliente, autrement dit personnalisés et définis pour cette entité cliente spécifiquement. Par exemple, le modèle de contrôle d'accès est dérivé d'un fichier de métadonnées décrivant des éléments définissant ce modèle (ex. rôle, action, sujet, vue) et une structure de ces éléments (ex. format attendu et/ou attribut(s)).

Le modèle et la politique de contrôle d'accès sont par conséquent aisément configurables (dans l'exemple considéré ci-dessus en fournissant un fichier de métadonnées distinct pour chaque modèle envisagé), et peuvent être modifiés dynamiquement par l'entité cliente de sorte à permettre un contrôle d'accès adapté à ses besoins à un instant donné et à la politique d'accès qu'elle souhaite mettre en oeuvre pour ses ressources et ses utilisateurs.

Ainsi, dans un mode particulier de réalisation, le module d'authentification et d'autorisation peut comprendre une unité de mise à jour apte à détecter un changement du modèle et/ou de la politique de contrôle d'accès en un nouveau modèle et/ou en une nouvelle politique de contrôle d'accès, et à obtenir ce nouveau modèle et/ou cette nouvelle politique de contrôle d'accès pour l'utiliser lors de l'étape de vérification. De cette sorte, le serveur applique un modèle et/ou une politique de contrôle d'accès à jour et pertinent pour l'entité cliente lors du contrôle d'accès qu'il réalise. Le mécanisme et le serveur selon l'invention permettent de cette sorte de prendre en compte facilement et en temps réel des modifications ou mises à jour de sa politique d'accès décidées par l'entité cliente.

Il convient de noter que l'invention prévoit un module d'authentification et d'autorisation distinct pour chaque entité cliente du fournisseur de service informatique en nuage, ce qui permet naturellement de bien distinguer la gestion des identités et le contrôle d'accès mis en oeuvre pour ces différentes entités. Chaque module d'authentification et d'autorisation peut être un module logiciel (ex. une instance d'une application logicielle ou un « bundle » en anglais) ou physique, isolé des autres modules d'authentification et d'autorisation exécutés par le serveur. Ce mécanisme offre ainsi la possibilité d'appliquer aisément au niveau du serveur différents modèles de contrôle d'accès (et politiques d'accès) à différentes entités clientes tout en protégeant l'accès aux ressources destinées à ces entités. Il en résulte une grande flexibilité par rapport à l'état antérieur de la technique.

Par ailleurs, l'invention offre une grande modularité : il est en effet possible d'ajouter facilement au niveau du serveur un module d'authentification et d'autorisation lorsqu'une nouvelle entité cliente est servie par le fournisseur de service, et inversement de supprimer un tel module sans impacter le contrôle d'accès mis en oeuvre pour les autres entités clientes. De façon similaire, il est possible de définir de nouveaux utilisateurs pour une entité cliente et/ou d'en supprimer au niveau du serveur, de façon transparente pour la plateforme du fournisseur de service.

Après authentification de l'utilisateur et vérification que celui-ci est bien autorisé à accéder à la ressource requise, le serveur transfère la requête d'accès à la plateforme du fournisseur de services : cette requête est modifiée avantageusement avant son transfert à l'aide de paramètre(s) d'authentification de l'entité cliente auprès de la plateforme de sorte à permettre l'authentification de l'entité cliente à laquelle l'utilisateur est rattaché par la plateforme du fournisseur de service. L'invention offre ainsi la possibilité d'interfacer aisément le procédé de traitement et le serveur avec les solutions de service informatique en nuage existantes décrites précédemment, qui disposent de leur propre module d'authentification et d'autorisation. La plateforme du fournisseur de service n'a plus besoin de gérer des comptes d'utilisateurs rattachés à un compte d'une entité cliente, ni les droits rattachés à ces comptes utilisateurs : elle peut se contenter de gérer uniquement le compte de cette entité cliente. Les données d'authentification et les comptes des utilisateurs sont gérés quant à eux de façon centralisée par le serveur.

Dans un mode particulier de réalisation, l'étape de vérification comprend en outre l'obtention d'informations relatives à la disponibilité de la ressource informatique provenant de la plateforme.

De cette sorte, lors du contrôle d'accès, le module d'authentification et de vérification associé à l'entité cliente peut prendre en compte également la disponibilité courante de la ressource (i.e. lors de la réception de la requête) au niveau de la plateforme, et adapter en fonction de cette disponibilité, sa décision d'autoriser ou non l'accès à cette ressource par le terminal.

Dans un autre mode particulier de réalisation, la requête dérivée de la requête d'accès du terminal comprend en outre une information représentative du succès des étapes d'authentification de l'utilisateur et de vérification.

Cette information permet à la plateforme du fournisseur de service de s'assurer qu'une authentification de l'utilisateur a bien été menée en amont.

Dans un mode particulier de réalisation :
- ledit au moins un premier paramètre d'authentification comprend au moins une première clé de chiffrement comprenant une clé secrète détenue par le terminal et le serveur ou une paire de clés privée et publique détenues respectivement par le terminal et le serveur ;
- la requête d'accès du terminal comprend une première donnée d'authentification du terminal auprès du serveur générée à partir d'au moins une partie de la requête d'accès et/ou d'un identifiant de l'utilisateur à l'aide d'une dite première clé de chiffrement détenue par le terminal ; et
- l'étape d'authentification comprend un déchiffrement de la première donnée d'authentification à l'aide d'une dite première clé de chiffrement détenue par le serveur.

Le déchiffrement de la première donnée d'authentification permet d'authentifier l'utilisateur : en effet, un déchiffrement de cette première donnée d'authentification n'est possible que si l'utilisateur a utilisé pour la générer une clé correspondant à la clé détenue par le serveur et associée à cet utilisateur (ex. clé privée associée à la clé publique ou clé secrète partagée avec le serveur).

Par ailleurs, selon une première variante de réalisation :
- ledit au moins un deuxième paramètre d'authentification comprend au moins une deuxième clé de chiffrement comprenant une clé secrète détenue par le serveur et la plateforme ou une paire de clés privée et publique détenues respectivement par le serveur et plateforme ; et
- la requête dérivée de la requête d'accès du terminal comprend une deuxième donnée d'authentification de l'entité auprès de la plateforme générée à partir d'au moins une partie de la requête d'accès et/ou d'un identifiant de l'entité cliente à l'aide d'une dite deuxième clé de chiffrement détenue par le serveur.

Cette variante a une application privilégiée lorsque le serveur dispose de la connaissance des paramètres et/ou des données d'authentification de l'entité cliente auprès de la plateforme du fournisseur de service informatique en nuage. Le serveur peut alors intégrer dans la requête dérivée de la requête d'accès du terminal une donnée d'authentification qui permet à la plateforme du fournisseur de service de s'assurer que la requête d'accès provient bien d'un terminal disposant des paramètres d'authentification de l'entité cliente (et donc *a priori* autorisé et/ou reconnu par l'entité cliente), et le cas échéant, authentifier ce terminal.

Selon une seconde variante de réalisation :
- ledit au moins un deuxième paramètre d'authentification de l'entité cliente comprend au moins une deuxième clé de chiffrement comprenant une clé secrète détenue par le terminal et la plateforme ou une paire de clés privée et publique détenues respectivement par le terminal et la plateforme ; et
- la requête d'accès du terminal comprend en outre une deuxième donnée d'authentification de l'entité générée à partir d'au moins une partie de la requête d'accès et/ou d'un identifiant de l'entité cliente à l'aide d'une dite deuxième clé de chiffrement détenue par le terminal ; et
- la requête dérivée de la requête d'accès du terminal comprend la deuxième donnée d'authentification et une troisième donnée d'authentification générée à l'aide d'une troisième clé de chiffrement détenue par le serveur.

Corrélativement, selon cette seconde variante, pour chaque module d'authentification et d'autorisation du serveur :
- ledit au moins un premier paramètre d'authentification comprend au moins une première clé de chiffrement comprenant une clé secrète détenue par le terminal et le serveur ou une paire de clés privée et publique détenues respectivement par le terminal et le serveur ;
- ledit au moins un deuxième paramètre d'authentification de l'entité cliente comprend au moins une deuxième clé de chiffrement comprenant une clé secrète détenue par le terminal et la plateforme ou une paire de clés privée et publique détenues respectivement par le terminal et la plateforme ;
- la requête d'accès du terminal comprend une première donnée d'authentification générée à partir d'au moins une partie de la requête d'accès et/ou d'un identifiant de l'utilisateur à l'aide d'une dite première clé de chiffrement détenue par le terminal, et une deuxième donnée d'authentification générée à partir d'au moins une partie de la requête d'accès et/ou d'un identifiant de l'entité cliente à l'aide d'une dite deuxième clé de chiffrement détenue par le terminal ; et
- l'unité d'authentification est apte à déchiffrer la première donnée d'authentification à l'aide d'une dite première clé de chiffrement détenue par le serveur ; et
- la requête dérivée comprend la deuxième donnée d'authentification et une troisième donnée d'authentification générée à l'aide d'une troisième clé de chiffrement détenue par le serveur.

La deuxième donnée d'authentification peut être intégrée (ou incluse) dans la troisième donnée d'authentification. Par exemple, la troisième donnée d'authentification peut être une version (éventuellement condensée) chiffrée de la deuxième donnée d'authentification à l'aide de la troisième clé de chiffrement détenue par le serveur.

Selon une alternative, la troisième donnée d'authentification peut être générée à l'aide de la troisième clé de chiffrement à partir de ladite au moins une partie de la requête d'accès et/ou de l'identifiant utilisée pour générer la deuxième signature.

Cette seconde variante a une application privilégiée lorsqu'au contraire le serveur ne dispose pas de la connaissance des paramètres et/ou des données d'authentification de l'entité cliente auprès de la plateforme du fournisseur de service informatique en nuage, par exemple dans un souci d'assurer la confidentialité et la sécurité des paramètres du compte client de l'entité cliente auprès du fournisseur de service informatique en nuage. Grâce aux deuxième(s) et troisième(s) clés de chiffrement, le serveur peut en effet continuer d'authentifier de manière fiable l'utilisateur du terminal sans accéder aux paramètres d'authentification de l'entité cliente auprès de la plateforme du fournisseur de service, tout en s'assurant que la requête qui est transférée à la plateforme du fournisseur de service contienne bien des données d'authentification de l'entité cliente pour sécuriser l'accès aux ressources mises à disposition de l'entité cliente par la plateforme. On évite ainsi, lorsque le serveur appartient à une tierce partie (i.e. distincte de l'entité cliente et du fournisseur de service informatique en nuage), une attaque de ce serveur afin d'obtenir les paramètres (et/ou les données d'authentification) du compte de l'entité cliente auprès du fournisseur de service informatique en nuage.

Dans un mode particulier de réalisation de l'invention, les données d'authentification (première, deuxième et/ou troisième) sont des signatures numériques.

Ce type de données d'authentification offre avantageusement la possibilité au serveur et/ou à la plateforme de vérifier l'intégrité des requêtes leur parvenant.

La seconde variante de réalisation précédemment décrite s'appuie non seulement sur le serveur et le procédé de traitement mis en oeuvre par celui-ci mais également sur la plateforme du fournisseur de service informatique en nuage qui est capable de traiter la requête transférée par le serveur et qui contient la deuxième et la troisième signatures.

Ainsi, selon un autre aspect, l'invention vise également un procédé de fourniture d'un accès à une ressource informatique mise à la disposition d'une entité cliente par une plateforme d'un fournisseur de service informatique en nuage, ce procédé étant destiné à être mis en oeuvre par cette plateforme et comprenant :
- une étape de réception d'une requête dérivée par un serveur d'une requête d'accès d'un terminal d'un utilisateur à la ressource informatique et résultant de l'exécution d'un procédé de traitement de la requête d'accès selon la seconde variante décrite précédemment, ce serveur étant situé entre le terminal et la plateforme ;
- une étape d'authentification de l'entité cliente à l'aide dudit au moins un deuxième paramètre d'authentification de l'entité cliente auprès de la plateforme comprenant :
   - le déchiffrement de la troisième signature à l'aide d'une clé de chiffrement détenue par la plateforme et associée à la troisième clé de chiffrement détenue par le serveur ; et
   - le déchiffrement de la deuxième donnée d'authentification à l'aide d'une dite deuxième clé de chiffrement détenue par la plateforme ; et
- une étape de fourniture de la ressource informatique au terminal.

Corrélativement, l'invention vise aussi une plateforme d'un fournisseur de service informatique mettant à disposition d'au moins une entité cliente des ressources informatiques et comprenant :
- un module de validation comportant :
   ∘ une unité de réception d'une requête dérivée par un serveur selon la seconde variante décrite précédemment d'une requête d'accès d'un terminal d'un utilisateur à une dite ressource informatique mise à la disposition de l'entité cliente, ce serveur étant situé entre le terminal et la plateforme ;
   ∘ une unité d'authentification de l'entité cliente comprenant :
      - des moyens de déchiffrement de la troisième signature à l'aide d'une clé de chiffrement détenue par la plateforme et associée à la troisième clé de chiffrement détenue par le serveur ; et
      - des moyens de déchiffrement de la deuxième donnée d'authentification à l'aide d'une dite deuxième clé de chiffrement détenue par la plateforme ;
- un module de fourniture de la ressource informatique au terminal.

Les avantages dont bénéficient ce procédé de fourniture et la plateforme mettant en oeuvre ce procédé sont identiques à ceux décrits précédemment pour la procédé de traitement et le serveur selon la seconde variante.

Dans un mode particulier de réalisation, le procédé de fourniture comprend en outre, avant l'étape de fourniture, une étape de vérification que l'entité cliente est autorisée à accéder à la ressource informatique requise par le terminal.

Dans un mode particulier de réalisation, les différentes étapes du procédé de traitement et/ou du procédé de fourniture sont déterminées par des instructions de programmes d'ordinateurs.

En conséquence, l'invention vise aussi un programme d'ordinateur sur un support d'informations, ce programme étant susceptible d'être mis en oeuvre dans un serveur ou plus généralement dans un ordinateur, ce programme comportant des instructions adaptées à la mise en oeuvre des étapes d'un procédé de traitement tel que décrit ci-dessus.

L'invention vise également un programme d'ordinateur sur un support d'informations, ce programme étant susceptible d'être mis en oeuvre dans une plateforme d'un fournisseur de service informatique en nuage ou plus généralement dans un ordinateur, ce programme comportant des instructions adaptées à la mise en oeuvre des étapes d'un procédé de fourniture tel que décrit ci-dessus.

Ces programmes peuvent utiliser n'importe quel langage de programmation, et être sous la forme de codes source, codes objet, ou de codes intermédiaires entre codes source et codes objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un système comprenant :
- une plateforme d'un fournisseur de service informatique en nuage mettant à disposition d'au moins une entité cliente des ressources informatiques ; et
- un serveur selon l'invention, situé entre la plateforme du fournisseur de service et un terminal à l'origine d'une requête d'accès à une dite ressource informatique mise à la disposition de l'entité cliente par la plateforme du fournisseur de service.

Dans un mode particulier de réalisation, ce serveur et cette plateforme sont conformes à la seconde variante décrite précédemment.

On peut également envisager, dans d'autres modes de réalisation, que le procédé de traitement, le procédé de fourniture, le serveur, la plateforme du fournisseur de service informatique en nuage, et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins et aux annexes qui en illustrent des exemples de réalisation dépourvus de tout caractère limitatif. Sur les figures et les annexes :
- la figure 1 représente, de façon schématique, un système et un serveur conformes à l'invention ainsi qu'une plateforme d'un fournisseur de service informatique en nuage dans un premier mode de réalisation ;
- les figures 2 et 3 illustrent respectivement un exemple d'architecture matérielle du serveur et de la plateforme de la figure 1 ;
- les figures 4A et 4B illustrent respectivement, sous forme d'ordinogrammes, les principales étapes d'un procédé de traitement selon l'invention et les principales étapes d'un procédé de fourniture tels qu'ils sont mis en oeuvre respectivement par le serveur et par la plateforme de la figure 1 dans le premier mode de réalisation ;
- la figure 5 représente, de façon schématique, un système, un serveur et une plateforme d'un fournisseur de service informatique en nuage conformes à l'invention dans un deuxième mode de réalisation ;
- les figures 6A et 6B illustrent respectivement, sous forme d'ordinogrammes, les principales étapes d'un procédé de traitement selon l'invention et les principales étapes d'un procédé de fourniture selon l'invention tels qu'ils sont mis en oeuvre respectivement par le serveur et par la plateforme de la figure 5 dans le deuxième mode de réalisation ;
- les annexes 1 et 2 illustrent des exemples de structures de fichiers de métadonnées pouvant être utilisés pour décrire les modèles de contrôle d'accès utilisés par les serveurs des figures 1 et 5.

### Description détaillée de l'invention

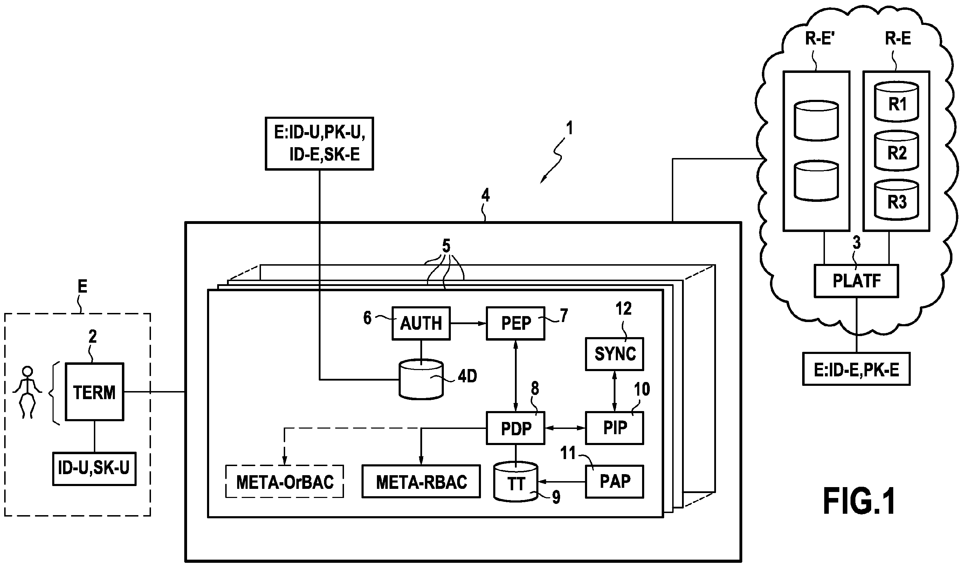

La **figure 1** représente, dans son environnement, un système 1 conforme à l'invention dans un premier mode de réalisation dans lequel le système 1 permet de contrôler l'accès par un utilisateur U rattaché à une entité dite cliente E, à une ressource informatique R1 via un terminal 2. La ressource R1 est une ressource sélectionnée parmi un ensemble de ressources informatiques R-E mises à la disposition de l'entité cliente E par une plateforme 3 d'un fournisseur de service informatique en nuage. L'ensemble de ressources R-E comprend par exemple un espace de stockage, de la puissance de calcul, des applications, des ressources réseaux, des logiciels ou encore des services, virtualisés et mutualisés.

L'entité cliente E est par exemple ici une entreprise à laquelle est rattachée une pluralité d'utilisateurs, dont l'utilisateur U. De façon connue en soi, l'entité cliente E dispose, pour accéder aux ressources informatiques R-E, d'un compte client enregistré auprès de la plateforme 3. Ce compte client est protégé par un ou des paramètres d'authentification (deuxièmes paramètres d'authentification au sens de l'invention) permettant à la plateforme 3 d'identifier l'entité E.

Comme mentionné précédemment, on entend ici par « paramètres d'authentification » d'une entité quelconque A auprès d'une entité quelconque B des éléments qui permettent de générer et/ou de traiter (manipuler) des données d'authentification de l'entité A auprès de l'entité B, c'est-à-dire des données qui vont être utilisées par l'entité A pour prouver son identité à l'entité B et être ainsi authentifié par l'entité B.

Dans l'exemple envisagé ici, ces paramètres d'authentification comprennent une paire de clés de chiffrement comprenant une clé publique PK-E et une clé privée SK-E, associée à un identifiant de l'entité E (tel que par exemple un nom ou un numéro de compte client ou encore une adresse mél, etc.) noté ID-E. Cette paire de clés est définie ici par la plateforme 3 lors de l'enregistrement de l'entité E. La clé privée SK-E est fournie par la plateforme 3 à l'entité E, et est destinée à être maintenue secrète par celle-ci ou tout du moins à être divulguée de façon restreinte (par exemple à des entités ou à des personnes de confiance) afin d'éviter une usurpation de son compte client auprès de la plateforme 3. La clé publique PK-E est gardée ici en mémoire par la plateforme 3 en association avec l'identifiant ID-E dans le compte client de l'entité E.

En variante, la paire de clés privée SK-E et publique PK-E est générée par une entité de confiance connue en soi, la clé privée SK-E étant fournie par cette entité de confiance à l'entité E, tandis que la clé publique PK-E est portée à la connaissance de la plateforme 3.

Dans le premier mode de réalisation décrit ici, le système 1 comprend la plateforme 3 ainsi qu'un serveur 4 conforme à l'invention, situé entre le terminal 2 et la plateforme 3, et plus précisément, en coupure de flux des requêtes d'accès aux ressources de l'ensemble R-E mis à disposition de l'entité E par la plateforme 3, émises par l'utilisateur U via son terminal 2. Le serveur 4 peut être indifféremment localisé chez l'entité cliente E, chez le fournisseur du service informatique en nuage (dans une entité fonctionnelle ou matérielle distincte de la plateforme 3) ou chez une tierce partie, distincte de l'entité cliente E et du fournisseur du service informatique en nuage.

Comme mentionné précédemment, ce serveur 4 réalise un contrôle de l'accès aux ressources de l'ensemble R-E par les utilisateurs de l'entité cliente E, et donc notamment par l'utilisateur U. A cet effet, il maintient une pluralité de comptes attachés à ces utilisateurs et associés à l'entité cliente E, chaque compte utilisateur comprenant un identifiant de l'utilisateur et des paramètres d'authentification de cet utilisateur auprès du serveur 4 (premiers paramètres d'authentification au sens de l'invention). Dans l'exemple envisagé ici, ces paramètres d'authentification comprennent une paire de clés privée/publique définie par le serveur 4 lors de l'enregistrement de chaque utilisateur. La clé privée a été fournie par le serveur 4 à l'utilisateur de manière sécurisée, par exemple via son terminal, et est destinée à être maintenue secrète par celui-ci. Ainsi, dans l'exemple envisagé à la figure 1, le serveur 4 dispose d'un compte enregistré pour l'utilisateur U de l'entité cliente E, dans lequel sont mémorisés un identifiant ID-U de l'utilisateur U et une clé publique PK-U associée à une clé privée SK-U détenue par l'utilisateur U sur son terminal 2.

Par ailleurs, dans le premier mode de réalisation décrit ici, le serveur 4 a également, stockés en mémoire, l'identifiant ID-E de l'entité E et la clé privée SK-E attribuée à l'entité E par la plateforme 3. Ces paramètres lui ont été fournis ici par l'entité E lors de sa souscription par exemple au service de contrôle d'accès offert par le serveur 4.

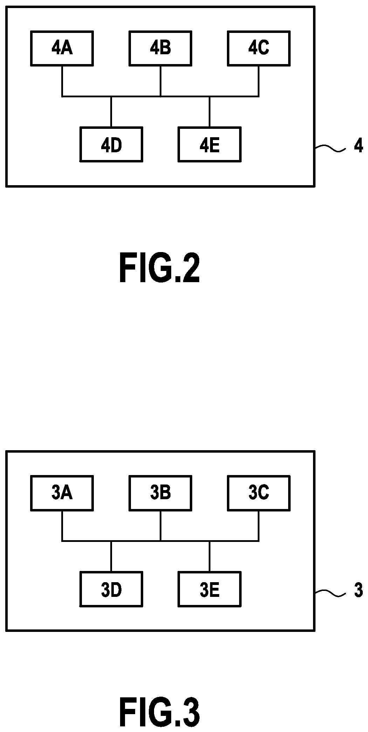

Le serveur 4 a ici l'architecture matérielle d'un ordinateur, telle que représentée à la **figure 2****.** Il comporte notamment un processeur 4A, une mémoire morte 4B, une mémoire vive 4C, une mémoire non volatile 4D, dans laquelle sont stockés notamment les comptes des utilisateurs rattachés à l'entité cliente E (et donc le compte de l'utilisateur U comprenant l'identifiant ID-U et la clé publique PK-U), l'identifiant ID-E et la clé privée SK-E de l'entité E, ainsi que des moyens de communication 4E avec notamment la plateforme 3 et le terminal 2. Ces moyens de communication 4E intègrent par exemple une carte réseau, connue en soi et non détaillée ici, ou tout autre moyen de communication sur un réseau de télécommunications.

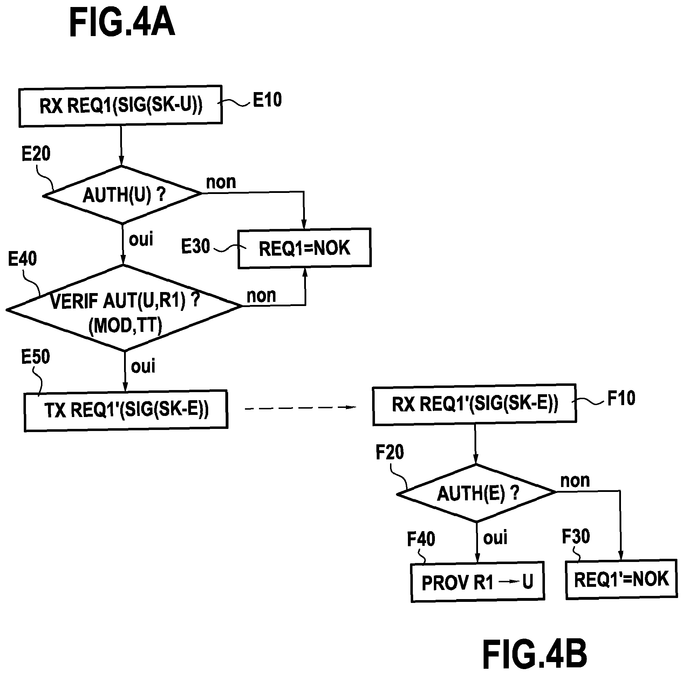

La mémoire morte 4B du serveur constitue un support d'enregistrement conforme à l'invention, lisible par le processeur 4A et sur lequel est enregistré un programme d'ordinateur conforme à l'invention, comportant des instructions pour l'exécution des étapes d'un procédé de traitement conforme à l'invention, décrites ultérieurement en référence à la figure 4A dans le premier mode de réalisation.

Ce programme d'ordinateur définit, de façon équivalente, des modules fonctionnels du serveur 4, et plus précisément, en référence à la figure 1, un module d'authentification et de validation 5, associé à l'entité cliente E, et comprenant ici :
- une unité d'authentification 6 ;
- une unité 7 de traitement des requêtes d'accès en provenance des terminaux des utilisateurs, chargée d'une part d'appliquer la politique définie par E d'accès (i.e. modèle et politique de contrôle d'accès) à ses ressources, et d'autre part, de transférer les requêtes d'accès « valides » (i.e. authentifiées et autorisées) à la plateforme 3 ;
- une unité 8 de vérification, apte à prendre une décision en matière d'accès sur une requête d'accès en appliquant le modèle et la politique de contrôle d'accès courants définis par l'entité E;
- un répertoire 9 contenant la ou les politiques de contrôle d'accès définies par l'entité E (ex. « un développeur est autorisé à gérer tel programme entre 8h et 16h », « un manager est autorisé à administrer tel espace mémoire via une adresse IP distincte de celles associées à sont bureau », etc.) ;
- une unité 10 de gestion des informations en relation avec la ou les politiques d'accès définies par l'entité cliente E ;
- une unité 11 responsable de l'administration des politiques d'accès de l'entité cliente E ;
- une unité 12 de synchronisation apte à communiquer avec la plateforme 3 par exemple via une interface de programmation (ou API pour Application Programming Interface) pour obtenir des informations concernant la disponibilité courante des ressources mises à disposition de l'entité cliente E par la plateforme 3.

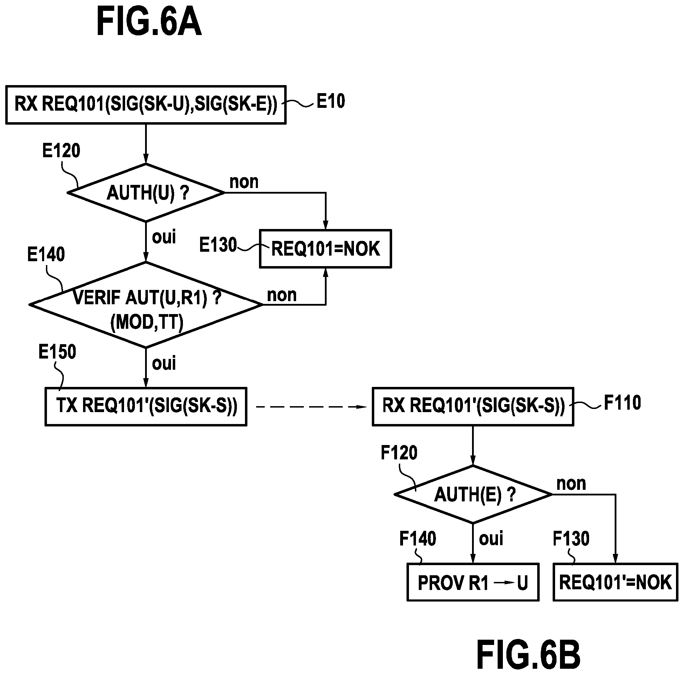

Les fonctions à proprement parler de ces différentes unités apparaissent plus clairement ultérieurement lors de la description des étapes du procédé de traitement selon l'invention, en référence aux figures 4A et 6A. On note toutefois que les unités 7, 8, 10, 11 et 9 ont des rôles qui s'apparentent respectivement aux rôles des blocs PEP (« Policy Enforcement Point), PDP (« Policy Decision Point »), PIP (« Policy Information Point »), PAP (« Policy Administration Point ») et du répertoire de politiques d'accès (« Policy Repository ») définis dans l'architecture de référence XACML (eXtensible Access Control Markup Language) définie par le standard IETF pour l'implémentation du contrôle d'accès dans les systèmes d'information.

Par ailleurs, il convient de noter que lorsque la plateforme 3 offre un service informatique en nuage à plusieurs entités clientes distinctes (par exemple, elle met à la disposition de l'entité cliente E l'ensemble de ressource R-E, et d'une autre entité cliente E' un ensemble de ressources R-E' distinct de l'ensemble R-E), le serveur 4 peut intégrer plusieurs modules d'authentification et de validation ayant une structure et un mode de fonctionnement identiques à ceux du module d'authentification et d'autorisation 5, et qui sont chacun dédiés à une entité cliente distincte (dans l'exemple envisagé ci-dessus, un module d'authentification et d'autorisation dédié à l'entité cliente E permettant de contrôler l'accès aux ressources de R-E et un module d'authentification et d'autorisation dédié à l'entité cliente E' permettant de contrôler l'accès aux ressources de R-E'). Ces modules sont préférentiellement isolés fonctionnellement ou physiquement les uns des autres afin de bien séparer la gestion du contrôle d'accès des différentes entités. Par exemple, il s'agit modules logiciels (aussi appelés instances) distincts isolés les uns des autres sur des machines virtuelles distinctes, ou des modules matériels distincts hébergés par des serveurs physiques différents. Par souci de simplification ici, on se limite à une entité cliente, à savoir l'entité cliente E.

Dans le premier mode de réalisation décrit ici, la plateforme 3 du fournisseur de service informatique en nuage a également l'architecture matérielle d'un ordinateur, telle que représentée à la figure 3. Ainsi, elle comporte un processeur 3A, une mémoire morte 3B, une mémoire vive 3C, une mémoire non volatile 3D (dans laquelle est stocké le compte de l'entité cliente E et notamment l'identifiant ID-E et la clé publique de chiffrement PK-E), ainsi que des moyens de communication 3E avec notamment le serveur 4. Ces moyens de communication 3E intègrent par exemple une carte réseau, connue en soi et non détaillée ici, ou tout autre moyen de communication sur un réseau de télécommunications.

La mémoire morte 3B de la plateforme constitue un support d'enregistrement, lisible par le processeur 3A et sur lequel est enregistré un programme d'ordinateur comportant des instructions pour l'exécution des étapes d'un procédé de fourniture d'un accès à une ressource mise à disposition de l'entité E décrites maintenant en référence à la figure 4B dans le premier mode de réalisation.

Nous allons maintenant décrire, en référence aux **figures 4A et 4B** respectivement, les principales étapes d'un procédé de traitement selon l'invention d'une requête d'accès émise par le terminal 2 de l'utilisateur à la ressource informatique R1 mise à disposition de l'entité E par la plateforme 3 et d'un procédé de fourniture d'un accès à la ressource R1 au terminal 2, tels qu'ils sont mis en oeuvre par le serveur 4 et la plateforme 3 respectivement dans le premier mode de réalisation.

En référence à la figure 4A, on suppose que l'utilisateur U de l'entité E adresse, via son terminal 2, au serveur 4 (et plus précisément au module d'authentification et d'autorisation 5 associé à l'entité E), une requête d'accès REQ1 à la ressource R1 mise à la disposition de l'entité E par la plateforme 3. Cette requête d'accès REQ1 comprend l'identifiant ID-U de l'utilisateur U, un corps de requête dans lequel notamment est identifiée la ressource R1, ainsi que selon le premier mode de réalisation, une première donnée d'authentification de l'utilisateur U auprès du serveur 4 générée à l'aide de la clé de chiffrement privée SK-U de l'utilisateur U.

Plus précisément, cette première donnée d'authentification est ici une signature numérique SIG(SK-U) générée en appliquant au corps de requête (ou à une partie déterminée de ce corps) et à l'identifiant ID-U, une fonction de hachage HASH connue en soi (ex. fonction MD5 ou SHA). Le condensé (ou empreinte numérique) résultant de cette opération est ensuite chiffré à l'aide d'un algorithme de chiffrement asymétrique, avec la clé privée de chiffrement SK-U, pour donner la signature numérique SIG(SK-U). Aucune limitation n'est attachée à l'algorithme de chiffrement utilisé.

La requête d'accès REQ1 est reçue par le serveur 4 via ses moyens de communication 4E, et transmise à l'unité d'authentification 6 du module d'authentification et d'autorisation 5 du serveur 4 associé à l'entité E (étape E10).

L'unité d'authentification 6 procède à l'authentification de l'utilisateur U à l'aide des paramètres d'authentification de l'utilisateur U stockés dans la mémoire non volatile 4D (étape E20).

A cet effet, elle utilise la clé de chiffrement publique PK-U pour déchiffrer la signature numérique SIG(SK-U) contenue dans la requête d'accès REQ1 (avec un algorithme de déchiffrement correspondant à l'algorithme de chiffrement utilisé par le terminal 2 pour générer la signature SIG(SK-U)). Un tel déchiffrement n'est possible que si la clé publique PK-U correspond bien à la clé privée utilisée par le terminal 2 pour générer la signature incluse dans la requête. Ce déchiffrement, s'il est exécuté avec succès, permet donc d'authentifier l'utilisateur U.

L'unité d'authentification 6 évalue par ailleurs ici une empreinte numérique en appliquant au corps de la requête REQ1 et à l'identifiant ID-U la fonction de hachage HACH. Il compare cette empreinte numérique au résultat du déchiffrement. Une identité de ces deux éléments permet de s'assurer de l'intégrité de la requête d'accès REQ1 reçue par le serveur 4.

Si l'authentification de l'utilisateur U et/ou la vérification de l'intégrité de la requête échoue(nt), la requête d'accès REQ1 est rejetée par l'unité d'authentification 6 et le terminal 2 en est informé (étape E30).

Sinon, la requête d'accès est transférée par l'unité d'authentification 6 vers l'unité de traitement 7 du module d'authentification et d'autorisation 5 du serveur 4 pour vérifier que l'utilisateur U est autorisé à accéder à la ressource R1.

Sur réception de la requête REQ1, l'unité de traitement 7 interroge l'unité 8 de vérification du module d'authentification et d'autorisation 5 pour vérifier les droits d'accès de l'utilisateur U (étape E40).

L'unité 8 de vérification identifie le modèle de contrôle d'accès MOD et la politique de contrôle d'accès Π (ex. tel sujet a la permission ou non de réaliser telle action sur tel objet) définies par l'entité E pour sa politique d'accès à ses ressources. Dans le mode de réalisation décrit ici, le modèle de contrôle d'accès MOD est dérivé (i.e. obtenu) d'un fichier de métadonnées décrivant les différents éléments définissant ce modèle ainsi que leur structure. Ce fichier de métadonnées a été fourni préalablement au serveur 4 par l'entité E via l'unité d'administration 11, ou construit par cette unité d'administration 11 à partir d'informations fournies par l'entité E. Il est stocké ici dans la mémoire non volatile 4D du serveur 4.

Un exemple d'un fichier de métadonnées décrivant un modèle de contrôle d'accès en language XML (eXtensible Markup Language) est donné en **Annexe 1.** Ce fichier comprend trois parties. La première partie (1) spécifie le nom du modèle. La deuxième partie (2) spécifie les éléments du modèle (i.e. les différentes entités définies dans ce modèle), et le cas échéant leurs attributs respectifs. La troisième partie (3) spécifie le format des politiques de contrôle d'accès correspondant à ce modèle.

**L'Annexe 2** illustre un exemple d'un tel fichier de métadonnées META-RBAC édité pour le modèle de contrôle d'accès connu RBAC. Ainsi, dans la deuxième partie du fichier, sont définis les éléments « Sujet », « Action », et « Objet » qui correspondent aux trois entités envisagées dans le modèle de contrôle d'accès RBAC. A l'élément « Sujet » est associé l'attribut « Rôle », chaque sujet étant associé à un rôle dans le modèle RBAC (ex. un rôle possible pour un sujet (i.e. un utilisateur ou un service) au sein d'une entreprise est « Admin », « Manager », « Employé », etc.). Enfin la troisième partie (3) spécifie la forme que doivent prendre les règles de traitement définies par les politiques de contrôle d'accès appliquées dans le cadre de ce modèle. En l'espèce ici, ces règles doivent spécifier pour un sujet, une action, un objet (ex. ressource R1), et un rôle associé au sujet, les droits d'accès accordés (« permission »).

On suppose ici que le modèle de contrôle d'accès MOD appliqué par l'unité de vérification 8 est un modèle de contrôle d'accès RBAC dérivé du fichier de métadonnées META-RBAC illustré schématiquement à l'Annexe 2.

Il convient de noter que le fichier de métadonnées décrivant le modèle de contrôle d'accès MOD devant être appliqué par l'unité 8 de vérification peut être amené à évoluer dans le temps, notamment si l'entité E décide d'opérer des changements dans sa politique d'accès. Ainsi par exemple, l'entité E peut décider de remplacer le modèle RBAC décrit dans le fichier META-RBAC par un modèle OrBAC, tel que décrit dans le document de A. Abou El Kalam et al. intitulé « Organization Based Access Control », 4th IEEE International Workshop on Policies for Distributed Systems and Networks, 2003. A cet effet, un nouveau fichier de métadonnées désigné par META-OrBAC sur la figure 1 et représenté en traits discontinus, est fourni au serveur 4. Dans le mode de réalisation décrit ici, le module d'authentification et d'autorisation 5 comprend des moyens de détecter un tel changement du modèle de contrôle d'accès (en détectant la présence du nouveau fichier de métadonnées META-OrBAC), et de signaler à l'unité de vérification 8 le changement de ce modèle. Celle-ci récupère (i.e. obtient) alors le fichier META-OrBAC décrivant le nouveau modèle à prendre en compte, et applique ce nouveau modèle lors de ses vérifications ultérieures. L'invention offre donc non seulement la possibilité de définir un modèle personnalisé pour chaque entité E, mais également de changer dynamiquement et facilement de modèle de contrôle d'accès au cours du temps.

La politique de contrôle d'accès Π est obtenue par l'unité de vérification 8 en consultant le répertoire 9 des politiques de contrôle d'accès : il extrait de ce répertoire la politique de contrôle d'accès associée au modèle défini dans le fichier de métadonnées META-RBAC. On suppose que ce répertoire a été provisionné préalablement par l'entité E, via l'unité 11 d'administration.

Dans le premier mode de réalisation décrit ici, l'unité de vérification 8 consulte également l'unité de gestion 10 afin d'obtenir des informations en relation avec la ressource requise par le terminal 2, c'est-à-dire avec la ressource R1. L'unité de gestion 10 interroge l'unité de synchronisation 12 avec la plateforme 3 du module d'authentification et d'autorisation 5 afin de connaître la disponibilité courante de la ressource R1, et communique cette information en retour à l'unité de gestion 10 qui la reporte à l'unité de vérification 8.

L'unité de vérification 8 applique alors le modèle de contrôle d'accès MOD et la politique d'accès Π ainsi obtenus à la requête REQ1 de l'utilisateur U (autrement dit à l'utilisateur U et à la ressource R1 requise) en tenant en compte des informations de disponibilité de la ressource R1 communiquées par l'unité de synchronisation 12, et détermine si l'utilisateur U est autorisé à accéder à la ressource R1 (étape E40). Elle informe l'unité de traitement 7 du résultat de cette détermination.

Si l'unité de vérification 8 détermine que l'utilisateur U n'est pas autorisé à accéder à la ressource R1, la requête d'accès REQ1 est rejetée par l'unité de traitement 7 du module d'authentification et d'autorisation 5 du serveur 4, et l'utilisateur U en est informé via son terminal 2 (étape E30). La requête d'accès REQ1 n'est pas transférée vers la plateforme 3 et l'utilisateur U n'a pas accès via son terminal 2 à la ressource R1.

Si au contraire, l'unité de vérification 8 détermine que l'utilisateur U est autorisé à accéder via son terminal 2 à la ressource R1, l'unité de traitement 7 émet à destination de la plateforme 3 du fournisseur de service informatique en nuage, via les moyens de communication 4E du serveur 4, une requête d'accès REQ1' dérivée de la requête d'accès REQ1 (étape E50).

Plus spécifiquement, l'unité de traitement 7 construit la requête REQ1' à partir de la requête REQ1 dans laquelle elle remplace l'identifiant ID-U de l'utilisateur U par l'identifiant ID-E de l'entité E (l'utilisateur U n'étant pas connu nécessairement de la plateforme 3), et la signature SIG(SK-U) par une deuxième donnée d'authentification de l'entité E auprès de la plateforme 3 générée à l'aide de la clé de chiffrement SK-E détenue par le serveur 4.

Dans le premier mode de réalisation décrit ici, cette deuxième donnée d'authentification est une signature numérique SIG(SK-E) générée en appliquant au corps de la requête REQ1 (ou à une partie déterminée de ce corps de requête) et à l'identifiant ID-E une fonction de hachage HASH' (la fonction HASH' pouvant être identique ou distincte de la fonction HASH). Le condensé résultant de cette opération est ensuite chiffré à l'aide d'un algorithme de chiffrement asymétrique, avec la clé privée de chiffrement SK-E, pour donner la signature numérique SIG(SK-E). Aucune limitation n'est attachée à l'algorithme de chiffrement utilisé.

La requête REQ1' dérivée de la requête REQ1 contient donc le corps de la requête REQ1, l'identifiant ID-E et la signature SIG(SK-E).

Ainsi, le serveur 4, en utilisant pour générer la requête REQ1' les paramètres d'authentification de l'entité E auprès de la plateforme 3, cache les informations spécifiques de l'utilisateur U à la plateforme 3. La plateforme 3 n'a donc pas besoin de gérer de comptes utilisateurs pour l'entité E.

Dans une variante de réalisation, le serveur 4 inclut également dans la requête REQ1' une information représentative du succès des étapes d'authentification de l'utilisateur et de vérification de l'autorisation de l'utilisateur U à accéder à la ressource R1. Cette information peut éventuellement être chiffrée à l'aide de la clé de chiffrement privée SK-E.

En référence à la figure 4B, sur réception de la requête REQ1' (étape F10), la plateforme 3, via son module de validation, procède à l'authentification de l'entité E, à l'aide des paramètres d'authentification de l'entité E stockées dans la mémoire non volatile 3D (étape F20).

A cet effet, elle utilise la clé de chiffrement publique PK-E pour déchiffrer la signature numérique SIG(SK-E) contenue dans la requête d'accès REQ1' (et un algorithme de déchiffrement correspondant à l'algorithme de chiffrement utilisé par le serveur 4 pour générer SIG(SK-E)). Un tel déchiffrement n'est possible que si la clé publique PK-E correspond bien à la clé privée utilisée par le serveur 4 pour générer la signature incluse dans la requête. Ce déchiffrement, s'il est exécuté avec succès, permet donc d'authentifier l'entité E.

Le module de validation de la plateforme 3 évalue par ailleurs ici une empreinte numérique en appliquant au corps de la requête REQ1 inclus dans la requête REQ1' et à l'identifiant ID-E la fonction de hachage HACH'. Il compare cette empreinte numérique au résultat du déchiffrement de la signature SIG(SK-E). Une identité des deux éléments permet de s'assurer de l'intégrité de la requête d'accès REQ1' reçue par la plateforme 3.

La plateforme 3 peut également vérifier que la ressource R1 requise est bien une ressource destinée à l'entité E, de façon connue en soi.

Si l'authentification de l'entité E et/ou la vérification de l'intégrité de la requête échoue(nt), la requête d'accès REQ1' est rejetée par le module de validation de la plateforme 3 et le serveur 4 en est informé (étape F30). Le serveur 4 informe à son tour l'utilisateur U de cet échec via son terminal 2.

Sinon, la plateforme 3 informe le serveur 4 du succès de l'authentification de l'entité E et fournit l'accès requis à la ressource R1 au terminal 2 (étape F40).

Dans ce premier mode de réalisation, le serveur 4 détient les paramètres d'authentification de l'entité E auprès de la plateforme 3. Comme mentionné précédemment, le serveur 4 qui joue le rôle d'intermédiaire entre le terminal 2 et la plateforme 3 peut se trouver indifféremment chez l'entité E (ou l'utilisateur U), chez le fournisseur du service informatique en nuage, ou chez une entité tiers distincte de l'entité E et du fournisseur du service informatique en nuage. Dans cette dernière configuration, l'entité E peut s'avérer réticente à divulguer ses paramètres et/ou ses données d'authentification auprès de la plateforme 3 au serveur 4. L'invention permet avantageusement, dans un deuxième mode de réalisation décrit maintenant, de gérer une telle contrainte.

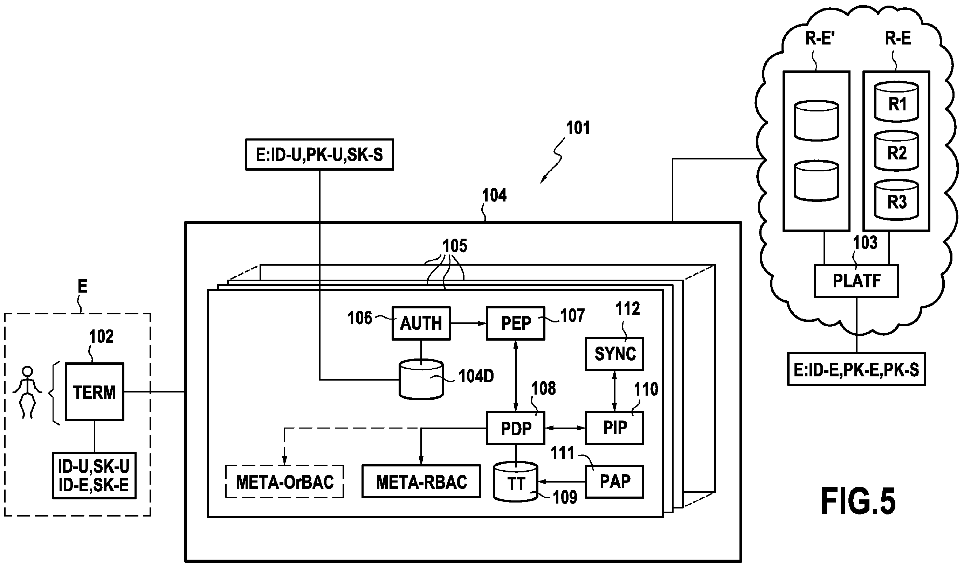

La **figure 5** illustre un système 101 conforme à l'invention selon ce deuxième mode de réalisation. Les éléments du système 101 similaires ou identiques par leur(s) fonction(s) aux éléments du système 1 sont désignés par les mêmes références + 100 (ex. terminal 2 -> terminal 102, plateforme 3 -> plateforme 103, etc.) et ne sont pas décrits de nouveau en détails.

Le système 101 diffère principalement du système 1 représenté à la figure 1 en ce que :
- les paramètres d'authentification de l'entité E auprès de la plateforme 103 du fournisseur de service informatique en nuage (ou plus précisément la clé privée de chiffrement SK-E dans l'exemple précédent) ne sont plus connus du serveur 104, mais uniquement du terminal 102 de l'utilisateur U ;
- une paire additionnelle de clés publique/privée, notées PK-S et SK-S respectivement, est définie par la plateforme 3 (ou par une entité de confiance) pour l'entité E, la clé privée SK-S étant fournie au serveur 4 et destinée à être maintenue secrète par celui-ci, tandis que la clé publique PK-S est stockée dans le compte de l'entité E par la plateforme 3 avec l'identifiant IDE et la clé publique PK-E.

Autrement dit, trois paires de clés de chiffrement publique/privée sont maintenant utilisées pour mettre en oeuvre l'invention dans ce deuxième mode de réalisation :
- la paire de clés de chiffrement PK-U/SK-U, qui permet d'authentifier l'utilisateur U auprès du serveur 104 ; et
- les deux paires de clés de chiffrement PK-E/SK-E et PK-S/SK-S, qui permettent d'authentifier l'entité E auprès de la plateforme 103 tout en maintenant secrètes vis-à-vis du serveur 104 les paramètres d'authentification de l'entité E : seul l'identifiant ID-E de l'entité est connu du serveur 104, la clé privée SK-E ne lui est pas divulguée.

De cette sorte, si l'intégrité du serveur 104 est compromise, par exemple par une attaque d'une entité malveillante, les paramètres d'authentification de l'entité E permettant de générer une donnée d'authentification de l'entité E auprès de la plateforme 3 ne sont pas divulgués.

Les **figures 6A et 6B** illustrent les principales étapes du procédé de traitement et du procédé de fourniture tels qu'ils sont mis en oeuvre par le serveur 104 et la plateforme 103 respectivement dans le deuxième mode de réalisation.

En référence à la figure 6A, on suppose pour illustrer ce deuxième mode de réalisation, que l'utilisateur U de l'entité E adresse, via son terminal 102, au serveur 104 (et plus précisément au module d'authentification et d'autorisation 105 associé à l'entité E), une requête d'accès REQ101 à la ressource R1 mise à la disposition de l'entité E par la plateforme 103. Cette requête d'accès REQ101 comprend l'identifiant ID-U de l'utilisateur U ainsi qu'un corps de requête dans lequel notamment est identifiée la ressource R1.

Conformément au deuxième mode de réalisation, la requête d'accès REQ101 comprend également deux données d'authentification, à savoir ici :
- une signature SIG(SK-U) du corps de la requête et de l'identifiant ID-U, générée par le terminal 102 en appliquant au corps de la requête REQ1 (ou à une partie déterminée de celui-ci) et à l'identifiant ID-U de l'utilisateur U une fonction de hachage HASH, puis en chiffrant le condensé obtenu avec la clé privée de chiffrement SK-U à l'aide d'un premier algorithme de chiffrement asymétrique ; et
- une signature SIG(SK-E) du corps de la requête et de l'identifiant ID-E, générée par le terminal 102 en appliquant au corps de la requête REQ1 (ou à une partie déterminée de celui-ci) et à l'identifiant ID-E de l'entité E une fonction de hachage HASH' (identique ou distincte de la fonction HASH), puis en chiffrant le condensé obtenu avec la clé privée de chiffrement SK-E à l'aide d'un second algorithme de chiffrement asymétrique.

Aucune limitation n'est attachée au choix des algorithmes de chiffrement asymétrique utilisés pour générer ces signatures ; ils peuvent être par ailleurs identiques ou distincts.

La requête d'accès REQ101 est reçue par le serveur 104 via ses moyens de communication 104E, et transmise à l'unité d'authentification 106 du module d'authentification et d'autorisation 105 du serveur 104 associé à l'entité E (étape E110).

L'unité d'authentification 106 procède à l'authentification de l'utilisateur U à l'aide des paramètres d'authentification de l'utilisateur U stockés dans la mémoire non volatile 104D (premières données d'authentification au sens de l'invention) (étape E120).

A cet effet, elle utilise la clé de chiffrement publique PK-U pour déchiffrer la signature numérique SIG(SK-U) contenue dans la requête d'accès REQ101. Un tel déchiffrement n'est possible que si la clé publique PK-U correspond bien à la clé privée utilisée par le terminal 102 pour générer la signature incluse dans la requête. Ce déchiffrement, s'il est exécuté avec succès, permet donc d'authentifier l'utilisateur U.

L'unité d'authentification 106 évalue par ailleurs ici une empreinte numérique en appliquant au corps de la requête REQ101 et à l'identifiant ID-U la fonction de hachage HACH. Il compare cette empreinte numérique au résultat du déchiffrement. Une identité de ces deux éléments permet de s'assurer de l'intégrité de la requête d'accès REQ101 reçue par le serveur 104.

Si l'authentification de l'utilisateur U et/ou la vérification de l'intégrité de la requête échoue(nt), la requête d'accès REQ101 est rejetée par l'unité d'authentification 106 et le terminal 102 en est informé (étape E130).

Sinon, la requête d'accès est transférée par l'unité d'authentification 106 vers l'unité de traitement 107 du module d'authentification et d'autorisation 105 du serveur 104 pour vérifier que l'utilisateur U est autorisé à accéder à la ressource R1 (étape E140). Cette vérification est menée dans le deuxième mode de réalisation par les unités de traitement 107, de vérification 108, de gestion 110, d'administration 111 et de synchronisation 112 de façon identique à la vérification menée par les unités de traitement 7, de vérification 8, de gestion 10, d'administration 11 et de synchronisation 12 dans le premier mode de réalisation.

Si l'unité de vérification 108 détermine que l'utilisateur U n'est pas autorisé à accéder à la ressource R1, la requête d'accès REQ101 est rejetée par l'unité de traitement 107 du module d'authentification et d'autorisation 105 du serveur 104, et l'utilisateur U en est informé via son terminal 102 (étape E130). La requête d'accès REQ101 n'est pas transférée vers la plateforme 103 et l'utilisateur U n'a pas accès via son terminal 102 à la ressource R1.

Si au contraire, l'unité de vérification 108 détermine que l'utilisateur U est autorisé à accéder via son terminal 102 à la ressource R1, l'unité de traitement 107 émet à destination de la plateforme 103 du fournisseur de service informatique en nuage, via les moyens de communication 104E du serveur 104, une requête d'accès REQ101' dérivée de la requête d'accès REQ101 (étape E150).

Plus spécifiquement, dans le deuxième mode de réalisation décrit ici, l'unité de traitement 107 construit la requête REQ101' à partir de la requête REQ101 dans laquelle elle remplace l'identifiant ID-U de l'utilisateur U par l'identifiant ID-E de l'entité E (l'utilisateur U n'étant pas connu nécessairement de la plateforme 103), et les signatures SIG(SK-U) et SIG(SK-E) par une troisième donnée d'authentification SIG(SK-S) dans laquelle est incluse la signature numérique SIG(SK-E). Cette troisième donnée d'authentification SIG(SK-S) est ici générée en chiffrant la signature numérique SIG(SK-E) à l'aide de la clé privée de chiffrement SK-S et d'un troisième algorithme de chiffrement asymétrique (distinct ou identique à celui utilisé par le terminal 102 pour générer les signatures SIG(SK-U) et SIG(SK-E)).

La requête REQ101' contient donc le corps de la requête 101 et la signature SIG(SK-S) générée à partir de la signature SIG(SK-E). Elle inclut donc bien au sens de l'invention les deux signatures SIG(SK-S) et SIG(SK-E).

Dans une variante de réalisation, le serveur 104 inclut également dans la requête REQ101' une information représentative du succès des étapes d'authentification de l'utilisateur et de vérification de l'autorisation de l'utilisateur U à accéder à la ressource R1. Cette information peut éventuellement être chiffrée à l'aide de la clé de chiffrement privée SK-S.

En référence à la figure 6B, sur réception de la requête REQ101' (étape F110), la plateforme 103, via son module de validation, procède à l'authentification de l'entité E, à l'aide des paramètres d'authentification de l'entité E stockées dans la mémoire non volatile 103D (étape F120).

A cet effet, elle procède en deux temps :
- dans un premier temps, elle utilise la clé de chiffrement publique PK-S pour déchiffrer la signature numérique SIG(SK-S) contenue dans la requête d'accès REQ101'. Un tel déchiffrement n'est possible que si la clé publique PK-S correspond bien à la clé privée utilisée par le serveur 104 pour générer la signature incluse dans la requête, et donc permet à la plateforme 103 d'authentifier le serveur 104 ;
- puis dans un second temps, la plateforme 103 utilise la clé de chiffrement publique PK-E pour déchiffrer le résultat du déchiffrement de la signature numérique SIG(SK-S) (autrement dit la signature numérique SIG(SK-E)). Un tel déchiffrement n'est possible que si la clé publique PK-E correspond bien à la clé secrète utilisée par le terminal 102 pour générer la signature SIG(SK-E).

Ces deux déchiffrements, s'ils sont exécutés avec succès, permettent donc à la plateforme 3 d'authentifier l'entité E.

Le module de validation de la plateforme 3 évalue par ailleurs ici une empreinte numérique en appliquant au corps de la requête REQ101' et à l'identifiant ID-E la fonction de hachage HACH'. Il compare cette empreinte numérique au résultat du déchiffrement. Une identité de ces deux éléments permet de s'assurer de l'intégrité de la requête d'accès REQ101' reçue par la plateforme 103.

La plateforme 103 peut également vérifier que la ressource R1 requise est bien une ressource destinée à l'entité E, de façon connue en soi.

Si l'authentification de l'entité E et/ou la vérification de l'intégrité de la requête échoue(nt), la requête d'accès REQ101' est rejetée par le module de validation de la plateforme 103 et le serveur 104 en est informé (étape F130). Le serveur 104 informe à son tour l'utilisateur U de cet échec via son terminal 102.

Sinon, la plateforme 103 informe le serveur 104 du succès de l'authentification de l'entité E et fournit l'accès requis à la ressource R1 au terminal 102 (étape F140).

Ce deuxième mode de réalisation permet donc au serveur 104 de réaliser un contrôle de l'accès aux ressources mises à disposition de l'entité E par la plateforme 103 du fournisseur de service informatique en nuage sans connaître les paramètres d'authentification de l'entité E auprès de la plateforme. On limite ainsi les dommages pour l'entité E en cas d'attaque de l'intégrité du serveur 104. En détenant seulement la clé privée SK-S du serveur 104, une entité malveillante ne peut pas accéder aux ressources mises à disposition de l'entité E par la plateforme 103.

Dans le deuxième mode de réalisation décrit ici, la requête REQ101' transmise à la plateforme 103 contient un troisième donnée d'authentification SIG(SK-S) générée en chiffrant la signature SIG(SK-E), de sorte que la signature SIG(SK-E) est intégrée lors de sa transmission dans la requête 101' dans la donnée d'authentification SIG(SK-S).

Dans une variante de ce deuxième mode de réalisation, la troisième donnée d'authentification SIG(SK-S) peut être une signature numérique de la signature SIG(SK-E) générée à l'aide de la clé privée de chiffrement SK-S du serveur 104, d'une fonction de hachage HASH" et d'un algorithme de chiffrement asymétrique. La requête REQ101' dérivée de la requête d'accès REQ101 peut alors comprendre les deux signatures SIG(SK-S) et SIG(SK-E) pour permettre à la plateforme 103 non seulement d'authentifier l'entité E mais également de vérifier l'intégrité de la requête REQ101' après déchiffrement de la signature SIG(SK-S).

Dans une autre variante encore de ce deuxième mode de réalisation, la troisième donnée d'authentification SIG(SK-S) peut être une signature numérique générée à partir de l'identifiant ID-E et du corps de la requête REQ101 utilisé par le terminal 102 pour générer la signature SIG(SK-E) (ou de la même partie du corps de la requête que celle utilisée par le terminal 102). La requête REQ101' dérivée de la requête d'accès REQ101 peut alors comprendre les deux signatures SIG(SK-S) et SIG(SK-E) pour permettre à la plateforme 103 non seulement d'authentifier l'entité E mais également de vérifier l'intégrité de la requête REQ101' après déchiffrements des signatures SIG(SK-S) et SIG(SK-E) et comparaison des résultats de ces déchiffrements.

En d'autres termes, dans le premier comme dans le deuxième mode de réalisation, les données d'authentification utilisées dans l'invention peuvent indifféremment résulter d'un chiffrement d'éléments déterminés ou de signatures numériques de tels éléments, selon si l'on souhaite ou non contrôler l'intégrité des requêtes transportant ces données d'authentification.

Il convient de noter que l'utilisation d'un mécanisme de protection tel que celui mis en oeuvre dans ce deuxième mode de réalisation n'est pas limitée à un serveur de contrôle d'accès tel que le serveur 104 et à une plateforme de fournisseur de service informatique en nuage telle que la plateforme 103. Ce mécanisme peut être appliqué à tout type d'entité A cherchant à accéder directement ou via une entité A' à un service ou à une ressource offerte par une entité B, par l'intermédiaire d'une entité C auprès de laquelle l'entité A (ou A') dispose d'un compte et à laquelle l'entité A est réticente à divulguer ses paramètres et/ou ses données d'authentification auprès de l'entité B. Une telle entité C jouant les intermédiaires entre les entités A (ou A') et B est aussi connue sous l'appellation de « broker » en anglais.

En outre, dans les deux modes de réalisation décrits ici, on a considéré des schémas de chiffrement asymétrique s'appuyant sur une clé publique de chiffrement et une clé privée de chiffrement. Dans un autre mode de réalisation, on peut envisager d'utiliser des schémas de chiffrement symétrique s'appuyant sur une clé secrète échangée préalablement entre les entités concernées (ex. entre le terminal et le serveur, entre le terminal et la plateforme, et entre le serveur et la plateforme). Les paramètres d'authentification au sens de l'invention comprennent alors ces clés secrètes, qui sont utilisées pour générer et traiter les données d'authentification.

### Annexe 1

### Exemple de structure de fichier de métadonnées décrivant le modèle RBAC

```
 <ModelName>Nom du modèle </ModelName> (1)
 <EntityList> (2)
 <Entity>
 < EntityName> Nom</EntityName>
 <EntityAttribute>Nom de l'attribut </EntityAttribute>
 </Entity>
 </EntityList>
 <PolicyFormatList> (3)
 <PolicyFormat>(Entité1,Entité1Attribut1,...,Entité1AttributN,...,EntitéN,...EntitéNAttributN,
 CombineEquation,TypePermission)</PolicyFormat>
...
 </PolicyFormatList>
```

### Annexe 2

### Exemple de structure de fichier de métadonnées décrivant le modèle RBAC

```
 <ModelName>RBAC</ModelName>
 <EntityList>
 <Entity>
 <EntityName>Sujet</EntityName>
 < EntityAttribute>Rôle</EntityAttribute>
 </Entity>
 <Entity>
 <EntityName>Action</EntityName>
 </Entity>
 <Entity>
 <EntityName>Objet</EntityName>
 </Entity>
 </Entities>
 <PolicyFormatList>
 <PolicyFormat>(Sujet,Rôle,Action,Objet, Rôle égal= « », permission)</PolicyFormat>
 </PolicyFormatList>
```

## Revendications

1. Procédé de traitement d'une requête d'accès (REQ1,REQ101) d'un terminal (2,102) d'un utilisateur (U) d'une entité cliente (E) à une ressource informatique (R1), ladite requête d'accès comprenant un identifiant de l'utilisateur, ladite ressource informatique (R1) étant mise à la disposition de l'entité cliente (E) par une plateforme (3,103) d'un fournisseur de service informatique en nuage auprès de laquelle l'entité cliente (E) a un compte enregistré protégé par au moins un paramètre d'authentification de l'entité cliente auprès de la plateforme dit deuxième paramètre d'authentification, ledit procédé étant destiné à être mis en oeuvre par un module (5,105) d'authentification et d'autorisation d'un serveur (4,104) situé entre le terminal et la plateforme, ledit module d'authentification et d'autorisation étant dédié à ladite entité cliente, ledit serveur maintenant un compte attaché audit utilisateur de l'entité cliente comprenant au moins un paramètre d'authentification de l'utilisateur auprès du serveur dit premier paramètre d'authentification, ledit procédé de traitement comprenant, suite à la réception (E10,E110) de la requête d'accès par le serveur :
- une étape d'authentification (E20,E120) de l'utilisateur à l'aide dudit au moins un premier paramètre d'authentification de l'utilisateur auprès du serveur ;
- une étape de vérification (E40,E140) des droits d'accès de l'utilisateur à la ressource informatique au cours de laquelle le module d'authentification et d'autorisation vérifie que l'utilisateur est autorisé à accéder via ledit terminal à la ressource informatique en appliquant audit utilisateur et à ladite ressource un modèle de contrôle d'accès (MOD) et une politique de contrôle d'accès correspondant audit modèle obtenus par ledit module d'authentification et d'autorisation pour ladite entité cliente ;
- si le module d'authentification et d'autorisation détermine lors de l'étape de vérification que l'utilisateur est autorisé à accéder à la ressource informatique, une étape d'envoi (E50,E150) vers la plateforme, de sorte à permettre une authentification de l'entité cliente par ladite plateforme, d'une requête (REQ1',REQ101') dérivée de la requête d'accès à partir dudit au moins un deuxième paramètre d'authentification de l'entité cliente auprès de la plateforme, et dans laquelle l'identifiant de l'utilisateur est remplacé par un identifiant de l'entité cliente ;
- sinon une étape (E30,E130) de rejet de la requête d'accès.

2. Procédé de traitement selon la revendication 1 dans lequel l'étape de vérification comprend en outre l'obtention d'informations relatives à la disponibilité de la ressource informatique provenant de la plateforme.

3. Procédé de traitement selon la revendication 1 ou 2 dans lequel :
- ledit au moins un premier paramètre d'authentification comprend au moins une première clé de chiffrement comprenant une clé secrète détenue par le terminal et le serveur ou une paire de clés privée et publique (SK-U,PK-U) détenues respectivement par le terminal (2) et le serveur (4) ;
- la requête d'accès du terminal comprend une première donnée d'authentification (SIG(SK-U)) du terminal auprès du serveur générée à partir d'au moins une partie de la requête d'accès et/ou d'un identifiant de l'utilisateur (ID-U) à l'aide d'une dite première clé de chiffrement (SK-U) détenue par le terminal ; et
- l'étape d'authentification comprend un déchiffrement de la première donnée d'authentification à l'aide d'une dite première clé de chiffrement détenue par le serveur.

4. Procédé de traitement selon l'une quelconque des revendications 1 à 3 dans lequel :
- ledit au moins un deuxième paramètre d'authentification comprend au moins une deuxième clé de chiffrement comprenant une clé secrète détenue par le serveur et la plateforme ou une paire de clés privée et publique (SK-E,PK-E) détenues respectivement par le serveur (4) et plateforme (3) ; et
- la requête dérivée (REQ1') de la requête d'accès (REQ1) du terminal comprend une deuxième donnée d'authentification (SIG(SK-E)) de l'entité auprès de la plateforme générée à partir d'au moins une partie de la requête d'accès et/ou d'un identifiant (ID-E) de l'entité cliente à l'aide d'une dite deuxième clé de chiffrement (SK-E) détenue par le serveur (4).

5. Procédé de traitement selon la revendication 3 dans lequel :
- ledit au moins un deuxième paramètre d'authentification de l'entité cliente comprend au moins une deuxième clé de chiffrement comprenant une clé secrète détenue par le terminal et la plateforme ou une paire de clés privée et publique (SK-E,PK-E) détenues respectivement par le terminal (102) et la plateforme (103) ;
- la requête d'accès (REQ101) du terminal (102) comprend en outre une deuxième donnée d'authentification (SIG(SK-E)) de l'entité générée à partir d'au moins une partie de la requête d'accès et/ou d'un identifiant de l'entité cliente (ID-E) à l'aide d'une dite deuxième clé de chiffrement (SK-E) détenue par le terminal (102) ; et
- la requête dérivée (REQ101') de la requête d'accès du terminal comprend ladite deuxième donnée d'authentification et une troisième donnée d'authentification (SIG(SK-S)) générée à l'aide d'une troisième clé de chiffrement (SK-S) détenue par le serveur (104).

6. Procédé de traitement selon la revendication 5 dans lequel :
- ladite deuxième donnée d'authentification est intégrée dans ladite troisième donnée d'authentification ; ou
- ladite troisième donnée d'authentification est générée à l'aide de ladite troisième clé de chiffrement à partir de ladite au moins une partie de la requête d'accès et/ou de l'identifiant utilisés pour générer ladite deuxième signature.

7. Procédé de traitement selon l'une quelconque des revendications 3 à 6 dans lequel lesdites données d'authentification sont des signatures numériques.

8. Procédé de traitement selon l'une quelconque des revendications 1 à 7 dans lequel la requête dérivée de la requête d'accès du terminal comprend en outre une information représentative du succès des étapes d'authentification de l'utilisateur et de vérification.

9. Procédé de fourniture d'un accès à une ressource informatique (R1) mise à la disposition d'une entité cliente (E) par une plateforme (103) d'un fournisseur de service informatique en nuage, ledit procédé étant destiné à être mis en oeuvre par ladite plateforme du fournisseur de service et comprenant :
- une étape de réception (F110) d'une requête (REQ101') dérivée par un serveur (104) d'une requête d'accès (REQ101) d'un terminal (102) d'un utilisateur (U) à ladite ressource informatique et résultant de l'exécution d'un procédé de traitement de la requête d'accès selon la revendication 5 ou 6, ledit serveur étant situé entre le terminal et la plateforme ;
- une étape d'authentification (F120) de l'entité cliente à l'aide dudit au moins un deuxième paramètre d'authentification de l'entité cliente auprès de la plateforme comprenant :
• le déchiffrement de la troisième donnée d'authentification (SIG(SK-S)) à l'aide d'une clé de chiffrement (PK-S) détenue par la plateforme (103) et associée à la troisième clé de chiffrement (SK-S) détenue par le serveur (104) ; et
• le déchiffrement de la deuxième donnée d'authentification à l'aide d'une dite deuxième clé de chiffrement (PK-E) détenue par la plateforme (103) ; et
- une étape de fourniture (F140) de la ressource informatique au terminal.

10. Procédé de fourniture selon la revendication 9 comprenant en outre, avant l'étape de fourniture, une étape de vérification que l'entité cliente est autorisée à accéder à ladite ressource informatique.

11. Programme d'ordinateur comportant des instructions pour l'exécution des étapes du procédé de traitement selon l'une quelconque des revendications 1 à 8 ou du procédé de fourniture selon la revendication 9 ou 10 lorsque ledit programme est exécuté par un ordinateur.

12. Support d'enregistrement lisible par un ordinateur sur lequel est enregistré un programme d'ordinateur comprenant des instructions pour l'exécution des étapes du procédé de traitement selon l'une quelconque des revendications 1 à 8 ou du procédé de fourniture selon la revendication 9 ou 10.

13. Serveur (4,104), situé entre un terminal d'un utilisateur et une plateforme d'un fournisseur de service informatique en nuage mettant à la disposition d'au moins une entité cliente (E) à laquelle est rattaché l'utilisateur des ressources informatiques, ladite entité cliente ayant un compte enregistré auprès de ladite plateforme protégé par au moins un paramètre d'authentification de l'entité cliente auprès de la plateforme dit deuxième paramètre d'authentification, ledit serveur comprenant au moins un module d'authentification et d'autorisation (5,105) dédié à l'entité cliente et maintenant un compte attaché audit utilisateur comprenant au moins un paramètre d'authentification de l'utilisateur auprès du serveur dit premier paramètre d'authentification et comportant :
- une unité (6,106) d'authentification de l'utilisateur, activée suite à la réception d'une requête d'accès dudit terminal à une dite ressource informatique mise à la disposition de ladite entité cliente, ladite requête d'accès comprenant un identifiant de l'utilisateur, ladite unité d'authentification étant apte à utiliser ledit au moins un premier paramètre d'authentification de l'utilisateur auprès du serveur ;
- une unité (7-8,107-108) de vérification des droits d'accès de l'utilisateur à ladite ressource informatique, apte à vérifier que ledit utilisateur est autorisé à accéder via ledit terminal à ladite ressource informatique en appliquant audit utilisateur et à ladite ressource un modèle de contrôle d'accès et une politique de contrôle d'accès correspondant audit modèle obtenus par ladite unité de vérification pour ladite entité cliente ;
- une unité (7,107) d'envoi, activée si l'unité de vérification détermine que l'utilisateur est autorisé à accéder à ladite ressource informatique, apte à envoyer vers la plateforme de sorte à permettre une authentification de l'entité cliente par la plateforme, une requête dérivée de la requête d'accès à partir dudit au moins un deuxième paramètre d'authentification de l'entité cliente auprès de la plateforme et dans laquelle l'identifiant de l'utilisateur est remplacé par un identifiant de l'entité cliente ;
- une unité (7,107) apte à rejeter la requête d'accès si l'unité de vérification détermine que l'utilisateur n'est pas autorisé à accéder à ladite ressource informatique.

14. Serveur (4) selon la revendication 13 dans lequel ledit modèle de contrôle d'accès utilisé par ladite unité de vérification est dérivé d'un fichier de métadonnées (META-RBAC,META-OrBAC) décrivant des éléments définissant ledit modèle et une structure desdits éléments.

15. Serveur (4,104) selon la revendication 13 ou 14 dans lequel ledit module d'authentification et d'autorisation comprend en outre une unité de mise à jour apte à détecter un changement dudit modèle et/ou de ladite politique de contrôle d'accès en un nouveau modèle et/ou en une nouvelle politique de contrôle d'accès, et à obtenir ledit nouveau modèle et/ou ladite nouvelle politique de contrôle d'accès pour l'utiliser lors de l'étape de vérification.

16. Serveur (104) selon l'une quelconque des revendications 13 à 15 dans lequel pour chaque module d'authentification et d'autorisation :
- ledit au moins un premier paramètre d'authentification comprend au moins une première clé de chiffrement comprenant une clé secrète détenue par le terminal et le serveur ou une paire de clés privée et publique détenues respectivement par le terminal et le serveur ;
- ledit au moins un deuxième paramètre d'authentification de l'entité cliente comprend au moins une deuxième clé de chiffrement comprenant une clé secrète détenue par le terminal et la plateforme ou une paire de clés privée et publique détenues respectivement par le terminal et la plateforme ;
- la requête d'accès du terminal comprend une première donnée d'authentification générée à partir d'au moins une partie de la requête d'accès et/ou un identifiant (ID-U) de l'utilisateur à l'aide d'une dite première clé de chiffrement détenue par le terminal, et une deuxième donnée d'authentification générée à partir d'au moins une partie de la requête d'accès et/ou d'un identifiant (ID-E) de l'entité cliente à l'aide d'une dite deuxième clé de chiffrement détenue par le terminal ;
- l'unité d'authentification est apte à déchiffrer la première donnée d'authentification à l'aide d'une dite première clé de chiffrement détenue par le serveur ; et
- la requête dérivée comprend ladite deuxième donnée d'authentification et une troisième donnée d'authentification générée à l'aide d'une troisième clé de chiffrement détenue par le serveur.

17. Plateforme (103) d'un fournisseur de service informatique mettant à disposition d'au moins une entité cliente des ressources informatiques et comprenant :
- un module de validation comportant :
∘ une unité de réception d'une requête dérivée par un serveur selon la revendication 16 d'une requête d'accès d'un terminal d'un utilisateur à une dite ressource informatique mise à la disposition de ladite entité cliente, ledit serveur étant situé entre le terminal et la plateforme ;
∘ une unité d'authentification de l'entité cliente comprenant :
• des moyens de déchiffrement de la troisième donnée d'authentification à l'aide d'une clé de chiffrement détenue par la plateforme et associée à la troisième clé de chiffrement (SK-S) détenue par le serveur (104) ; et
• des moyens de déchiffrement de la deuxième donnée d'authentification à l'aide d'une dite deuxième clé de chiffrement détenue par la plateforme ;
- un module de fourniture de ladite ressource informatique audit terminal.

18. Système (1,101) comprenant :
- une plateforme (3,103) d'un fournisseur de service informatique en nuage mettant à disposition d'au moins une entité cliente des ressources informatiques; et
- un serveur (4,104) selon l'une quelconque des revendications 13 à 15, situé entre ladite plateforme dudit fournisseur de service et un terminal à l'origine d'une requête d'accès à une dite ressource informatique mise à la disposition de ladite entité cliente par ladite plateforme dudit fournisseur de service.

19. Système (101) selon la revendication 18 dans lequel le serveur (104) est conforme à la revendication 16 et la plateforme (103) est conforme à la revendication 17.

## Patentansprüche

1. Verfahren zur Bearbeitung einer Zugriffsanfrage (REQ1, REQ101) eines Endgeräts (2, 102) eines Benutzers (U) einer Client-Entität (E) auf eine IT-Ressource (R1), die Zugriffsanfrage umfassend eine Kennung des Benutzers, wobei die IT-Ressource (R1) der Client-Entität (E) durch eine Plattform (3, 103) eines Cloud-IT-Dienstanbieters bereitgestellt wird, bei der die Client-Entität (E) ein registriertes Konto hat, das von mindestens einem Parameter zur Authentifizierung der Client-Entität bei der Plattform, dem zweiten Parameter zur Authentifizierung, geschützt wird, wobei das Verfahren dazu bestimmt ist, von einem Modul (5, 105) zur Authentifizierung und Autorisierung eines Servers (4, 104) umgesetzt zu werden, der sich zwischen dem Endgerät und der Plattform befindet, wobei das Modul zur Authentifizierung und Autorisierung für die Client-Entität dediziert ist, wobei der Server ein Konto aufrechterhält, das mit dem Benutzer der Client-Entität verknüpft ist, das mindestens einen Parameter zur Authentifizierung des Benutzers am Server, den ersten Parameter zur Authentifizierung, umfasst, das Verfahren zur Bearbeitung umfassend, nach Empfang (E10, E110) der Zugriffsanfrage durch den Server:
- einen Schritt des Authentifizierens (E20, E120) des Benutzers mithilfe des mindestens einen Parameters zur Authentifizierung am Server;
- eines Schritt des Überprüfens (E40, E140) der Zugriffsrechte des Benutzers auf die IT-Ressource, während welchem das Modul zur Authentifizierung und Autorisierung überprüft, dass der Benutzer berechtigt ist, über das Endgerät auf die IT-Ressource zuzugreifen, indem ein Zugriffssteuerungsmodell (MOD) und eine Zugriffssteuerungsrichtlinie, die dem Modell entspricht, die von dem Modul zur Authentifizierung und Autorisierung für die Client-Entität erhalten wurden, auf den Benutzer und auf IT-Ressource angewandt werden;
- wenn das Modul zur Authentifizierung und Autorisierung beim Schritt des Überprüfens feststellt, dass der Benutzer berechtigt ist, auf die IT-Ressource zuzugreifen, einen Schritt des Sendens (E50, E150) einer Anfrage (REQ1', REQ101'), die auf Grundlage des mindestens einen zweiten Parameters zur Authentifizierung der Client-Entität bei der Plattform von der Zugriffsanfrage abgeleitet ist, an die Plattform, um eine Authentifizierung der Client-Entität durch die Plattform zu ermöglichen, und wobei die Kennung des Benutzers durch eine Kennung der Client-Entität ersetzt wird;
- ansonsten einen Schritt (E30, E130) des Ablehnens der Zugriffsanfrage.

2. Verfahren zur Bearbeitung nach Anspruch 1, wobei der Schritt des Überprüfens ferner das Erhalten von Informationen bezüglich der Verfügbarkeit der IT-Ressource von der Plattform umfasst.

3. Verfahren zur Bearbeitung nach Anspruch 1 oder 2, wobei:
- der mindestens eine erste Parameter zur Authentifizierung mindestens einen ersten Verschlüsselungsschlüssel umfasst, umfassend einen geheimen Schlüssel, der von dem Endgerät und dem Server aufbewahrt wird, oder ein Paar privater und öffentlicher Schlüssel (SK-U, PK-U), die jeweils von dem Endgerät (2) und dem Server (4) aufbewahrt werden;
- die Zugriffsanfrage des Endgeräts eine erste Angabe zur Authentifizierung (SIG(SK-U)) des Endgeräts am Server umfasst, die auf Grundlage zumindest eines Teils der Zugriffsanfrage und/oder einer Kennung des Benutzers (ID-U) mithilfe eines ersten Verschlüsselungsschlüssels (SK-U), der von dem Endgerät aufbewahrt wird, erzeugt wird; und
- der Schritt des Authentifizierens ein Entschlüsseln der ersten Angabe zur Authentifizierung mithilfe eines ersten Verschlüsselungsschlüssels, der von dem Server aufbewahrt wird, umfasst.

4. Verfahren zur Bearbeitung nach einem der Ansprüche 1 bis 3, wobei:
- der mindestens eine zweite Parameter zur Authentifizierung mindestens einen zweiten Verschlüsselungsschlüssel umfasst, umfassend einen geheimen Schlüssel, der von dem Server und der Plattform aufbewahrt wird, oder ein Paar privater und öffentlicher Schlüssel (SK-E, PK-E), die jeweils von dem Server (4) und Plattform (3) aufbewahrt werden; und
- die Anfrage (REQ1'), die von der Zugriffsanfrage (REQ1) des Endgeräts abgeleitet ist, eine zweite Angabe zur Authentifizierung (SIG(SK-E)) der Entität bei der Plattform umfasst, die auf Grundlage zumindest eines Teils der Zugriffsanfrage und/oder einer Kennung (ID-E) der Client-Entität mithilfe eines zweiten Verschlüsselungsschlüssels (SK-E), der von dem Server (4) aufbewahrt wird, erzeugt wird.

5. Verfahren zur Bearbeitung nach Anspruch 3, wobei:
- der mindestens eine zweite Parameter zur Authentifizierung der Client-Entität mindestens einen zweiten Verschlüsselungsschlüssel umfasst, umfassend einen geheimen Schlüssel, der von dem Endgerät und der Plattform aufbewahrt wird, oder ein Paar privater und öffentlicher Schlüssel (SK-E, PK-E), die jeweils von dem Endgerät (102) und der Plattform (103) aufbewahrt werden;
- die Zugriffsanfrage (REQ101) des Endgeräts (102) ferner eine zweite Angabe zur Authentifizierung (SIG(SK-E)) der Entität umfasst, die auf Grundlage zumindest eines Teils der Zugriffsanfrage und/oder einer Kennung der Client-Entität (ID-E) mithilfe eines zweiten Verschlüsselungsschlüssels (SK-E), der von dem Endgerät (102) aufbewahrt wird, erzeugt wird; und
- die Anfrage (REQ101'), die von der Zugriffsanfrage des Endgeräts abgeleitet ist, die zweite Angabe zur Authentifizierung und eine dritte Angabe zur Authentifizierung (SIG(SK-S)) umfasst, die mithilfe eines dritten Verschlüsselungsschlüssels (SK-S), der von dem Server (104) aufbewahrt wird, erzeugt wird.

6. Verfahren zur Bearbeitung nach Anspruch 5, wobei:
- die zweite Angabe zur Authentifizierung in die dritte Angabe zur Authentifizierung integriert ist; oder
- die dritte Angabe zur Authentifizierung mithilfe des dritten Verschlüsselungsschlüssels auf Grundlage des mindestens einen Teils der Zugriffsanfrage und/oder der Kennung, die genutzt werden, um die zweite Signatur zu erzeugen, erzeugt wird.

7. Verfahren zur Bearbeitung nach einem der Ansprüche 3 bis 6, wobei die Authentifizierungsangaben digitale Signaturen sind.

8. Verfahren zur Bearbeitung nach einem der Ansprüche 1 bis 7, wobei die Anfrage, die von der Zugriffsanfrage des Endgeräts abgeleitet ist, ferner eine Information umfasst, die den Erfolg der Schritte des Authentifizierens des Benutzers und des Überprüfens darstellen.

9. Verfahren zur Bereitzustellung eines Zugriffs auf eine IT-Ressource (R1), die einer Client-Entität (E) durch eine Plattform (103) eines Cloud-IT-Dienstanbieters bereitgestellt wird, wobei das Verfahren dazu bestimmt ist, durch die Plattform des Dienstanbieters umgesetzt zu werden, und Folgendes umfasst:
- einen Schritt des Empfangens (F110) einer Anfrage (REQ101'), die durch einen Server (104) von einer Zugriffsanfrage (REQ101) eines Endgeräts (102) eines Benutzers (U) auf die IT-Ressource abgeleitet ist und aus der Ausführung eines Verfahrens zur Bearbeitung der Zugriffsanfrage nach Anspruch 5 oder 6 folgt, wobei sich der Server zwischen dem Endgerät und der Plattform befindet;
- einen Schritt des Authentifizierens (F120) der Client-Entität mithilfe des mindestens einen zweiten Parameters zur Authentifizierung der Client-Entität bei der Plattform, umfassend:
• das Entschlüsseln der dritten Angabe zur Authentifizierung (SIG(SK-S)) mithilfe eines Verschlüsselungsschlüssels (PK-S), der von der Plattform (103) aufbewahrt wird und mit dem dritten Verschlüsselungsschlüssel (SK-S), der von dem Server (104) aufbewahrt wird, in Verbindung steht; und
• das Entschlüsseln der zweiten Angabe zur Authentifizierung mithilfe eines zweiten Verschlüsselungsschlüssels (PK-E), der von der Plattform (103) aufbewahrt wird; und
- einen Schritt des Bereitstellens (F140) der IT-Ressource an das Endgerät.

10. Verfahren zur Bereitzustellung nach Anspruch 9, ferner umfassend, vor dem Schritt des Bereitstellens, einen Schritt des Überprüfens, dass die Client-Entität berechtigt ist, auf die IT-Ressource zuzugreifen.

11. Computerprogramm, umfassend Anweisungen für die Ausführung der Schritte des Verfahrens zur Bearbeitung nach einem der Ansprüche 1 bis 8 oder des Verfahrens zur Bereitstellung nach Anspruch 9 oder 10, wenn das Programm von einem Computer ausgeführt wird.

12. Computerlesbares Speichermedium, auf dem ein Computerprogramm gespeichert ist, das Anweisungen für die Ausführung der Schritte des Verfahrens zur Bearbeitung nach einem der Ansprüche 1 bis 8 oder des Verfahrens zur Bereitstellung nach Anspruch 9 oder 10 umfasst.

13. Server (4, 104), der sich zwischen einem Endgerät eines Benutzers und einer Plattform eines Cloud-IT-Dienstanbieters befindet, der mindestens einer Client-Entität (E), mit der der Benutzer in Verbindung steht, IT-Ressourcen bereitstellt, wobei die Client-Entität ein registriertes Konto bei der Plattform hat, das von mindestens einem Parameter zur Authentifizierung der Client-Entität bei der Plattform, dem zweiten Parameter zur Authentifizierung, geschützt wird, wobei der Server mindestens ein Modul zur Authentifizierung und zur Autorisierung (5, 105), das für die Client-Entität dediziert ist, umfasst, und ein Konto aufrechterhält, das mit dem Benutzer der Client-Entität verknüpft ist, das mindestens einen Parameter zur Authentifizierung des Benutzers am Server, den ersten Parameter zur Authentifizierung, umfasst, und Folgendes aufweist:
- eine Einheit (6, 106) zur Authentifizierung des Benutzers, die nach Erhalt einer Zugriffsanfrage des Endgeräts auf eine IT-Ressource aktiviert wird, die der Client-Entität bereitgestellt wird, die Zugriffsanfrage umfassend eine Kennung des Benutzers, wobei die Einheit zur Authentifizierung geeignet ist, den mindestens einen Parameter zur Authentifizierung des Benutzers am Server zu nutzen;
- eines Einheit (7 bis 8, 107 bis 108) zur Überprüfung der Zugriffsrechte des Benutzers auf die IT-Ressource, die geeignet ist, zu überprüfen, dass der Benutzer berechtigt ist, über das Endgerät auf die IT-Ressource zuzugreifen, indem ein Zugriffssteuerungsmodell und eine Zugriffssteuerungsrichtlinie, die dem Modell entspricht, die von der Einheit zur Überprüfung für die Client-Entität erhalten wurden, auf den Benutzer und auf die Ressource angewandt werden;
- eine Einheit (7, 107) zum Senden, die aktiviert wird, wenn die Einheit zur Überprüfung feststellt, dass der Benutzer berechtigt ist, auf die IT-Ressource zuzugreifen, die geeignet ist, eine Anfrage, die auf Grundlage des mindestens einen zweiten Parameters zur Authentifizierung der Client-Entität bei der Plattform von der Zugriffsanfrage abgeleitet ist, an die Plattform zu senden, um eine Authentifizierung der Client-Entität durch die Plattform zu ermöglichen, und wobei die Kennung des Benutzers durch eine Kennung der Client-Entität ersetzt wird;
- eine Einheit (7, 107), die geeignet ist, die Zugriffsanfrage abzulehnen, wenn die Einheit zur Überprüfung feststellt, dass der Benutzer nicht berechtigt ist, auf die IT-Ressource zuzugreifen.

14. Server (4) nach Anspruch 13, wobei das Zugriffssteuerungsmodell, das von der Überprüfungseinheit genutzt wird, von einer Metadatendatei (META-RBAC, META-OrBAC) abgeleitet ist, die Elemente beschreibt, die das Modell und eine Struktur der Elemente definieren.

15. Server (4, 104) nach Anspruch 13 oder 14, wobei das Modul zur Authentifizierung und Autorisierung ferner eine Aktualisierungseinheit umfasst, die geeignet ist, eine Änderung des Modells und/oder der Zugriffssteuerungsrichtlinie zu einem neuen Modell und/oder einer neuen Zugriffssteuerungsrichtlinie zu erkennen, und das neue Modell und/oder die neue Zugriffssteuerungsrichtlinie zu erhalten, um es/sie bei dem Schritt des Überprüfens zu nutzen.

16. Server (104) nach einem der Ansprüche 13 bis 15, wobei für jedes Modul zur Authentifizierung und Autorisierung:
- der mindestens eine erste Parameter zur Authentifizierung mindestens einen ersten Verschlüsselungsschlüssel umfasst, umfassend einen geheimen Schlüssel, der von dem Endgerät und dem Server aufbewahrt wird, oder ein Paar privater und öffentlicher Schlüssel, die jeweils von dem Endgerät und dem Server aufbewahrt werden;
- der mindestens eine zweite Parameter zur Authentifizierung der Client-Entität mindestens einen zweiten Verschlüsselungsschlüssel umfasst, umfassend einen geheimen Schlüssel, der von dem Endgerät und der Plattform aufbewahrt wird, oder ein Paar privater und öffentlicher Schlüssel, die jeweils von dem Endgerät und der Plattform aufbewahrt werden;
- die Zugriffsanfrage des Endgeräts eine erste Angabe zur Authentifizierung, die auf Grundlage zumindest eines Teils der Zugriffsanfrage und/oder einer Kennung (ID-U) des Benutzers mithilfe eines ersten Verschlüsselungsschlüssels, der von dem Endgerät aufbewahrt wird, erzeugt wird, und eine zweite Angabe zur Authentifizierung, die auf Grundlage zumindest eines Teils der Zugriffsanfrage und/oder einer Kennung (ID-E) der Client-Entität mithilfe eines zweiten Verschlüsselungsschlüssels, der von dem Endgerät aufbewahrt wird, erzeugt wird, umfasst;
- die Einheit zur Authentifizierung geeignet ist, die erste Angabe zur Authentifizierung mithilfe eines ersten Verschlüsselungsschlüssels, der von dem Server aufbewahrt wird, zu entschlüsseln; und
- die abgeleitete Anfrage die zweite Angabe zur Authentifizierung und eine dritte Angabe zur Authentifizierung umfasst, die mithilfe eines dritten Verschlüsselungsschlüssels, der von dem Server aufbewahrt wird, erzeugt wird.

17. Plattform (103) eines IT-Dienstanbieters, die mindestens einer Client-Entität IT-Ressourcen bereitstellt und Folgendes umfasst:
- ein Bestätigungsmodul, das Folgendes aufweist:
o eine Einheit zum Empfang einer Anfrage, die durch einen Server nach Anspruch 16 von einer Zugriffsanfrage eines Endgeräts eines Benutzers auf eine IT-Ressource abgeleitet ist, die der Client-Entität bereitgestellt wird, wobei sich der Server zwischen dem Endgerät und der Plattform befindet;
o eine Einheit zur Authentifizierung der Client-Entität, umfassend:
• Mittel zum Entschlüsseln der dritten Angabe zur Authentifizierung mithilfe eines Verschlüsselungsschlüssels, der von der Plattform aufbewahrt wird und mit dem dritten Verschlüsselungsschlüssel (SK-S), der von dem Server (104) aufbewahrt wird, in Verbindung steht; und
• Mittel zum Entschlüsseln der zweiten Angabe zur Authentifizierung mithilfe eines zweiten Verschlüsselungsschlüssels, der von der Plattform aufbewahrt wird;
- ein Modul zur Bereitstellung der IT-Ressource an das Endgerät.

18. Systems (1, 101), umfassend:
- eine Plattform (3, 103) eines Cloud-IT-Dienstanbieters, die mindestens einer Client-Entität IT-Ressourcen bereitstellt; und
- einen Server (4, 104) nach einem der Ansprüche 13 bis 15, der sich zwischen der Plattform des Dienstanbieters und einem Endgerät, an dem eine Anfrage nach Zugriff auf eine IT-Ressource, die der Client-Entität durch die Plattform des Dienstanbieters bereitgestellt wird, ihren Ursprung hat, befindet.

19. System (101) nach Anspruch 18, wobei der Server (104) dem Anspruch 16 entspricht und die Plattform (103) dem Anspruch 17 entspricht.

## Claims

1. Method for processing a request (REQ1, REQ101) for a terminal (2,102) of a user (U) of a client entity (E) to access a computer resource (R1), said access request comprising an identifier of the user, said computer resource (R1) being made available to the client entity (E) by a platform (3,103) of a cloud computing service provider with which the client entity (E) has a registered account protected by at least one parameter authenticating the client entity with the platform called second authentication parameter, said method being intended to be implemented by an authentication and authorization module (5,105) of a server (4,104) situated between the terminal and the platform, said authentication and authorization module being dedicated to said client entity, said server maintaining an account attached to said user of the client entity comprising at least one parameter authenticating the user with the server called first authentication parameter, said processing method comprising, following the reception (E10,E110) of the access request by the server:
- a step of authentication (E20,E120) of the user using said at least one first parameter authenticating the user with the server;
- a step of verification (E40,E140) of the rights of access of the user to the computer resource during which the authentication and authorization module verifies that the user is authorized to access the computer resource via said terminal by applying to said user and to said resource an access control model (MOD) and an access control policy corresponding to said model that are obtained by said authentication and authorization module for said client entity;
- if the authentication and authorization module determines, in the verification step, that the user is authorized to access the computer resource, a step of sending (E50,E150) to the platform, so as to allow an authentication of the client entity by said platform, of a request (REQ1',REQ101') derived from the access request from said at least one second parameter authenticating the client entity with the platform, and in which the identifier of the user is replaced by an identifier of the client entity;
- otherwise, a step (E30,E130) of rejection of the access request.

2. Processing method according to Claim 1, in which the verification step also comprises the obtaining of information relating to the availability of the computer resource from the platform.

3. Processing method according to Claim 1 or 2, in which:
- said at least one first authentication parameter comprises at least one first encryption key comprising a secret key held by the terminal and the server or a pair of private and public keys (SK-U,PK-U) held respectively by the terminal (2) and the server (4) ;
- the access request from the terminal comprises a first datum (SIG(SK-U)) authenticating the terminal with the server generated from at least a part of the access request and/or from an identifier of the user (ID-U) using one said first encryption key (SK-U) held by the terminal; and
- the authentication step comprises a decryption of the first authentication datum using one said first encryption key held by the server.

4. Processing method according to any one of Claims 1 to 3, in which:
- said at least one second authentication parameter comprises at least one second encryption key comprising a secret key held by the server and the platform or a pair of private and public keys (SK-E,PK-E) held respectively by the server (4) and platform (3); and
- the request derived (REQ1') from the access request (REQ1) from the terminal comprises a second datum (SIG(SK-E)) authenticating the entity with the platform generated from at least a part of the access request and/or from an identifier (ID-E) of the client entity using one said second encryption key (SK-E) held by the server (4).

5. Processing method according to Claim 3, in which:
- said at least one second parameter authenticating the client entity comprises at least one second encryption key comprising a secret key held by the terminal and the platform or a pair of private and public keys (SK-E,PK-E) held respectively by the terminal (102) and the platform (103);
- the access request (REQ101) from the terminal (102) also comprises a second datum (SIG(SK-E)) authenticating the entity generated from at least a part of the access request and/or from an identifier of the client entity (ID-E) using one said second encryption key (SK-E) held by the terminal (102); and
- the request (REQ101') derived from the access request from the terminal comprises said second authentication datum and a third authentication datum (SIG(SK-S)) generated using a third encryption key (SK-S) held by the server (104).

6. Processing method according to Claim 5, in which:
- said second authentication datum is incorporated in said third authentication datum; or
- said third authentication datum is generated using said third encryption key from said at least one part of the access request and/or of the identifier used to generate said second signature.

7. Processing method according to any one of Claims 3 to 6, in which said authentication data are digital signatures.

8. Processing method according to any one of Claims 1 to 7, in which the request derived from the access request from the terminal also comprises an information item representative of the success of the user authentication and verification steps.

9. Method for providing access to a computer resource (R1) made available to a client entity (E) by a platform (103) of a cloud computing service provider, said method being intended to be implemented by said platform of the service provider and comprising:
- a step of reception (F110) of a request (REQ101') derived by a server (104) from a request (REQ101) for a terminal (102) of a user (U) to access said computer resource and resulting from the execution of a method for processing the access request according to Claim 5 or 6, said server being situated between the terminal and the platform;
- a step of authentication (F120) of the client entity using said at least one second parameter authenticating the client entity with the platform comprising:
• the decryption of the third authentication datum (SIG(SK-S)) using an encryption key (PK-S) held by the platform (103) and associated with the third encryption key (SK-S) held by the server (104); and
• the decryption of the second authentication datum using one said second encryption key (PK-E) held by the platform (103); and
- a step of provision (F140) of the computer resource to the terminal.

10. Method of provision according to Claim 9, also comprising, before the provision step, a step of verification that the client entity is authorized to access said computer resource.

11. Computer program comprising instructions for the execution of the steps of the processing method according to any one of Claims 1 to 8 or of the provision method according to Claim 9 or 10 when said program is run by a computer.

12. Computer-readable storage medium on which is stored a computer program comprising instructions for the execution of the steps of the processing method according to any one of Claims 1 to 8 or of the provision method according to Claim 9 or 10.

13. Server (4,104), situated between a terminal of a user and a platform of a cloud computing service provider making computer resources available to at least one client entity (E) to which the user is attached, said client entity having a registered account with said platform protected by at least one parameter authenticating the client entity with the platform called second authentication parameter, said server comprising at least one authentication and authorization module (5,105) dedicated to the client entity and maintaining an account attached to said user comprising at least one parameter authenticating the user with the server called first authentication parameter and comprising:
- a user authentication unit (6,106), activated following the reception of a request for said terminal to access one said computer resource made available to said client entity, said access request comprising an identifier of the user, said authentication unit being able to use said at least one first parameter authenticating the user with the server;
- a unit (7-8,107-108) for verifying the rights of access of the user to said computer resource, capable of verifying that said user is authorized to access said computer resource via said terminal by applying to said user and to said resource an access control model and an access control policy corresponding to said model that are obtained by said verification unit for said client entity;
- a sending unit (7,107), activated if the verification unit determines that the user is authorized to access said computer resource, capable of sending, to the platform so as to allow an authentication of the client entity by the platform, a request derived from the access request from said at least one second parameter authenticating the client entity with the platform and in which the identifier of the user is replaced by an identifier of the client entity;
- a unit (7,107) capable of rejecting the access request if the verification unit determines that the user is not authorized to access said computer resource.

14. Server (4) according to Claim 13, in which said access control model used by said verification unit is derived from a metadata file (META-RBAC,META-OrBAC) describing elements defining said model and a structure of said elements.

15. Server (4,104) according to Claim 13 or 14, in which said authentication and authorization module also comprises an updating unit capable of detecting a change of said model and/or of said access control policy to a new model and/or to a new access control policy, and of obtaining said new model and/or said new access control policy to use it in the verification step.

16. Server (104) according to any one of Claims 13 to 15, in which, for each authentication and authorization module:
- said at least one first authentication parameter comprises at least one first encryption key comprising a secret key held by the terminal and the server or a pair of private and public keys held respectively by the terminal and the server;
- said at least one second parameter authenticating the client entity comprises at least one second encryption key comprising a secret key held by the terminal and the platform or a pair of private and public keys held respectively by the terminal and the platform;
- the access request from the terminal comprises a first authentication datum generated from at least a part of the access request and/or an identifier (ID-U) of the user using one said first encryption key held by the terminal, and a second authentication datum generated from at least a part of the access request and/or from an identifier (ID-E) of the client entity using one said second encryption key held by the terminal;
- the authentication unit is capable of decrypting the first authentication datum using one said first encryption key held by the server; and
- the derived request comprises said second authentication datum and a third authentication datum generated using a third encryption key held by the server.

17. Platform (103) of a computer service provider making computer resources available to at least one client entity and comprising:
- a validation module comprising:
• a unit for receiving a request derived by a server according to Claim 16 from a request for a terminal of a user to access one said computer resource made available to said client entity, said server being situated between the terminal and the platform;
• a client entity authentication unit comprising:
• means for decrypting the third authentication datum using one encryption key held by the platform and associated with the third encryption key (SK-S) held by the server (104); and
• means for decrypting the second authentication datum using one said second encryption key held by the platform;
- a module providing said computer resource to said terminal.

18. System (1,101) comprising:
- a platform (3,103) of a cloud computing service provider making computer resources available to at least one client entity; and
- a server (4,104) according to any one of Claims 13 to 15, situated between said platform of said service provider and a terminal originating a request to access one said computer resource made available to said client entity by said platform of said service provider.

19. System (101) according to Claim 18, in which the server (104) is in accordance with Claim 16 and the platform (103) is in accordance with Claim 17.
